# EUROPEAN PATENT APPLICATION

(11) **EP 2 975 451 A1**
(43) Date of publication of application: **20.01.2016**
(21) Application number: 14762758.2
(22) Date of filing: 20.02.2014
(51) Int. Cl.: G02F 1/1333, G02F 1/13, G02F 1/1335

(54) **DISPLAY DEVICE AND METHOD FOR MANUFACTURING SAME**

(30) Priority: 15.03.2013 JP 2013053261
(71) Applicant: Sony Corporation, Tokyo 108-0075 (JP)
(72) Inventor: NAGAOKA, Kenichi, Tokyo 108-0075 (JP); SHIRATA, Yoshinari, Tokyo 108-0075 (JP); INOKUCHI, Tatsuya, Tokyo 108-0075 (JP); MURABAYASHI, Noboru, Tokyo 108-0075 (JP)
(74) Representative: Witte, Weller & Partner Patentanwälte mbB
(86) International application number: PCT/JP2014/053980
(87) International publication number: WO 2014/141842

(57) **Abstract**

Provided is a display device that makes it possible to restrain color unevenness or display unevenness. A display device includes a display panel. The display panel includes: a first substrate and a second substrate facing each other; a first structure provided on the first substrate; and a second structure provided on the second substrate. Relative positional relation between the first structure and the second structure is adjusted two-dimensionally in accordance with a non-planarity characteristic of the display panel.

## Description

### Technical Field

The present disclosure relates to a display device including a curved panel and a manufacturing method thereof.

### Background Art

Television devices installed with liquid crystal panels are widely spreading these days. Furthermore, in accompany with development of imaging technology, various contents with higher image quality have become available for viewing. Recently, television devices have been developed that are installed with curved panels configured of curved liquid crystal panels.

In the curved panel, a flat panel in which two substrates face each other is deformed into a curved shape. Accordingly, there may arise deviation in relative positional relation between structures on one substrate (e.g., a black matrix) and structures on the other substrate (e.g., color filters and data wirings), which may be possible causes of color unevenness and display unevenness.

To cope therewith, for example, Patent Literature 1 provides description that a horizontal width of the black matrix is varied between in both horizontal end portions of the substrate and in a center portion of the substrate.

Also, for example, Patent Literature 2 proposes that a pitch in a pixel region in a direction of curvature should be varied between the substrate on the inner side of the curvature and the substrate on the outer side of the curvature. Moreover, Patent Literature 2 explains that an amount of displacement in the pixel region generated due to the curvature varies in proportion to a coordinate in the direction of the curvature (specifically, in a lateral direction) of the liquid crystal panel.

### Citation List

### Patent Literature

Patent Literature 1: JP 2008-145778A
Patent Literature 2: JP 2007-333818A

### Summary of Invention

In the display device including the curved panel, it is desired to lessen deviation in relative positional relation between structures on two substrates and to restrain color unevenness and display unevenness.

It is therefore desirable to provide a display device and a method of manufacturing the display device that make it possible to restrain color unevenness and display unevenness and to perform high quality display.

A display device according to an embodiment of the present disclosure includes a display panel. The display panel includes: a first substrate and a second substrate facing each other; a first structure provided on the first substrate; and a second structure provided on the second substrate. Relative positional relation between the first structure and the second structure is adjusted two-dimensionally in accordance with a non-planarity characteristic of the display panel.

In the display device according to the above-described embodiment of the present disclosure, the relative positional relation between the first structure on the first substrate and the second structure on the second substrate is adjusted two-dimensionally in accordance with the non-planarity characteristic of the display panel. Accordingly, deviation in the relative positional relation between the first structure and the second structure is reduced, and color unevenness and display unevenness is restrained.

A method of manufacturing a display device according to an embodiment of the present disclosure includes: forming a first structure on a first substrate; forming a second structure on a second substrate; and allowing the first substrate and the second substrate to face each other to form a display panel. Relative positional relation between the first structure and the second structure is adjusted two-dimensionally in accordance with a non-planarity characteristic of the display panel.

According to the display device according to the embodiment of the present disclosure and the method of manufacturing the display device according to the embodiment of the present disclosure, the relative positional relation between the first structure and the second structure is adjusted two-dimensionally in accordance with the non-planarity characteristic of the display panel. Hence, it is possible to restrain color unevenness and display unevenness and to perform high quality display.

### Brief Description of Drawings

[Fig. 1]

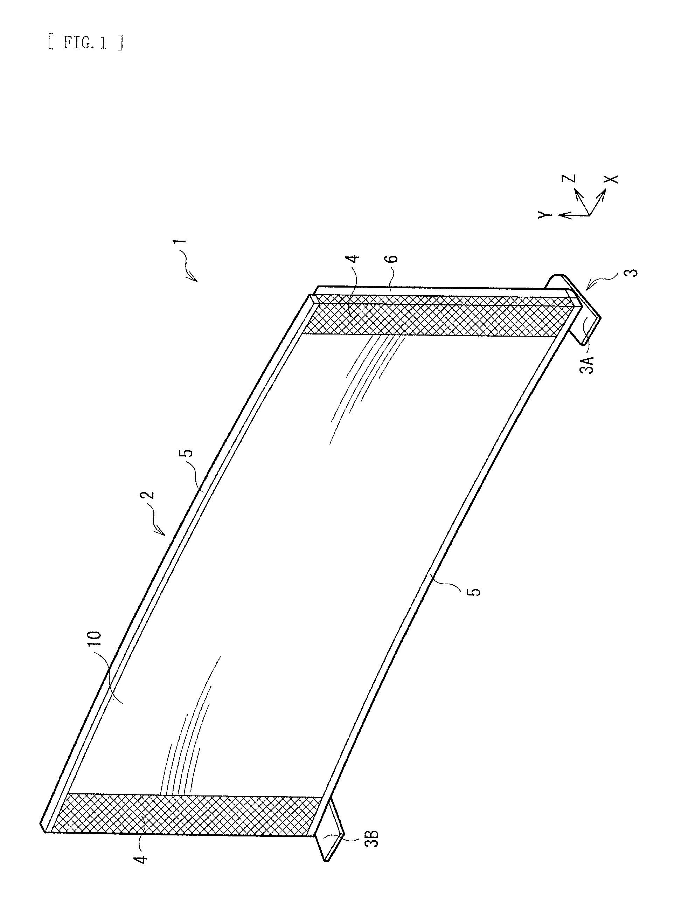

   Fig. 1 is a perspective view illustrating one example of an appearance of a display device according to an embodiment of the present disclosure, viewed from a front surface side.
[Fig. 2]

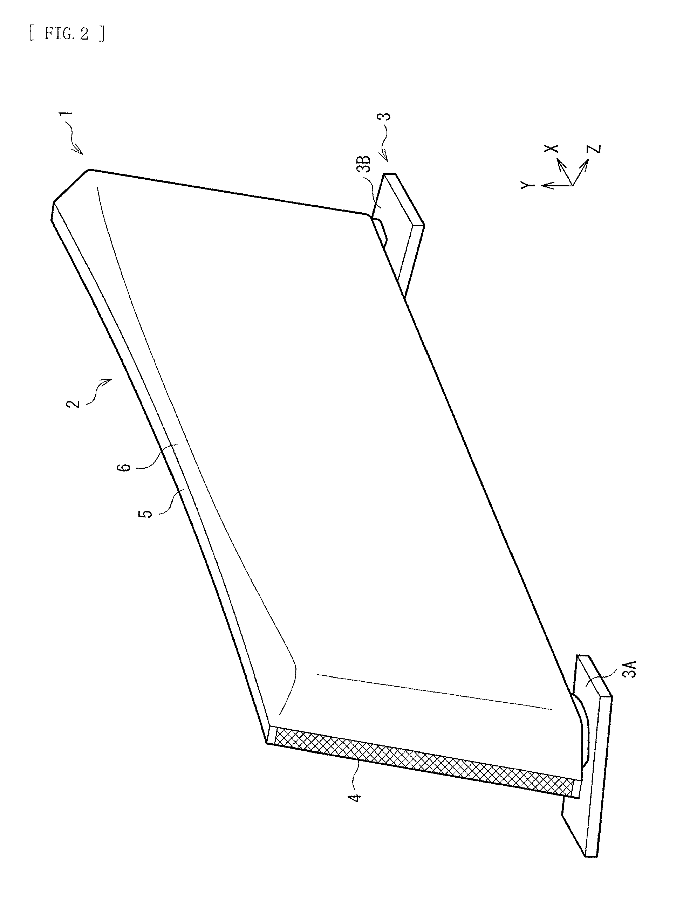

   Fig. 2 is a perspective view illustrating one example of the appearance of the display device illustrated in Fig. 1, viewed from a back surface side.
[Fig. 3]

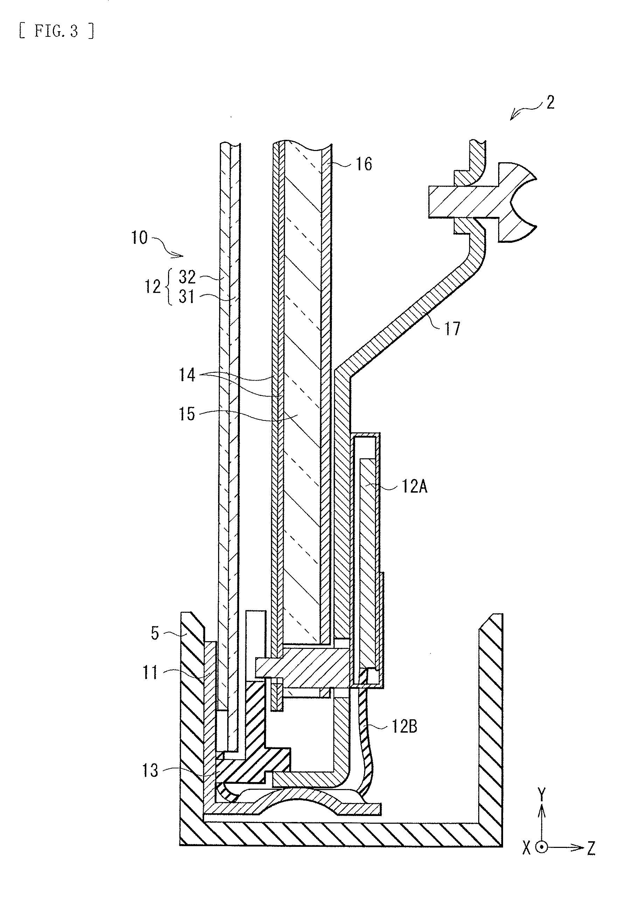

   Fig. 3 is a cross-sectional view illustrating one example of an internal configuration in a center portion of a liquid crystal panel illustrated in Fig. 1.
[Fig. 4]

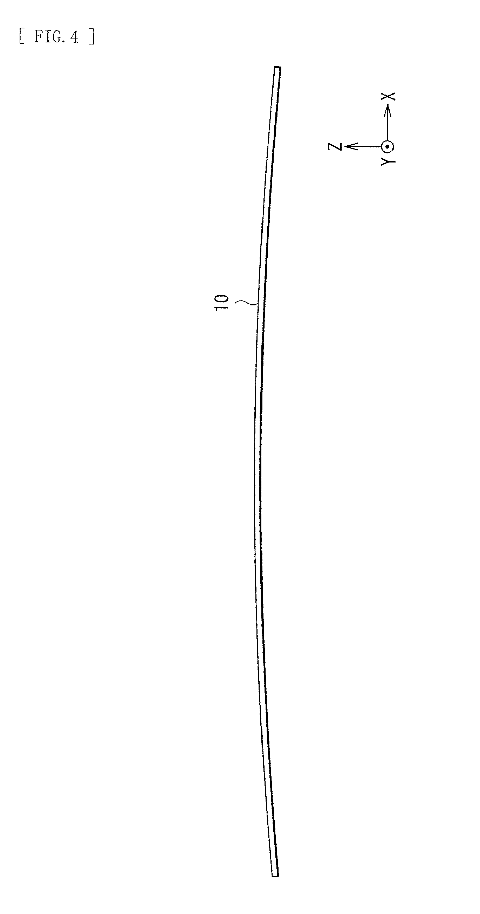

   Fig. 4 is a top view illustrating one example of a curved shape of the liquid crystal panel illustrated in Fig. 1.
[Fig. 5]

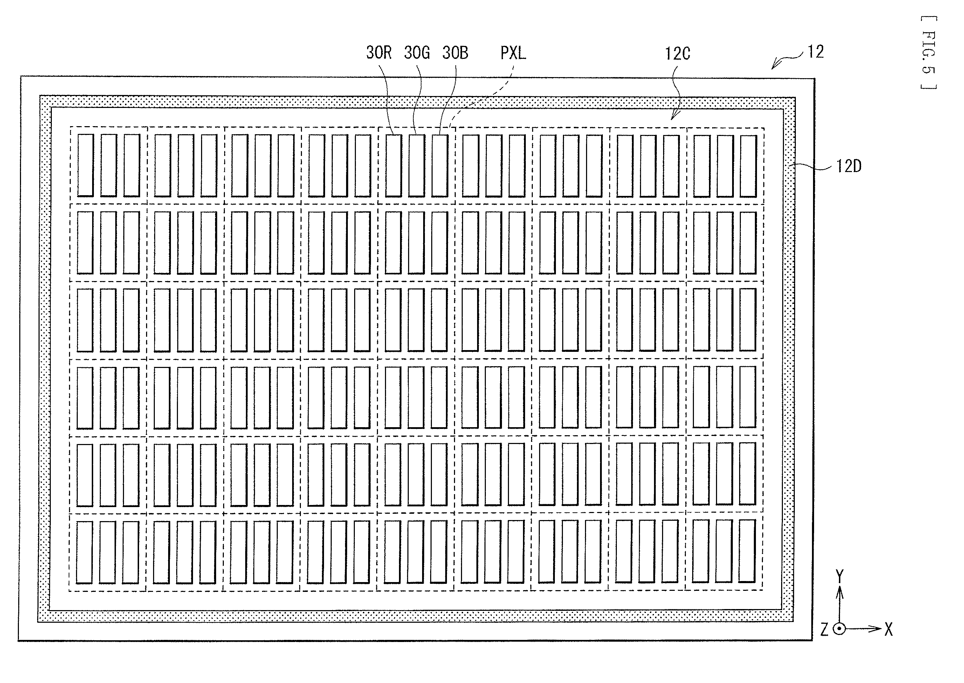

   Fig. 5 is a planar view of a liquid crystal cell illustrated in Fig. 3.
[Fig. 6]

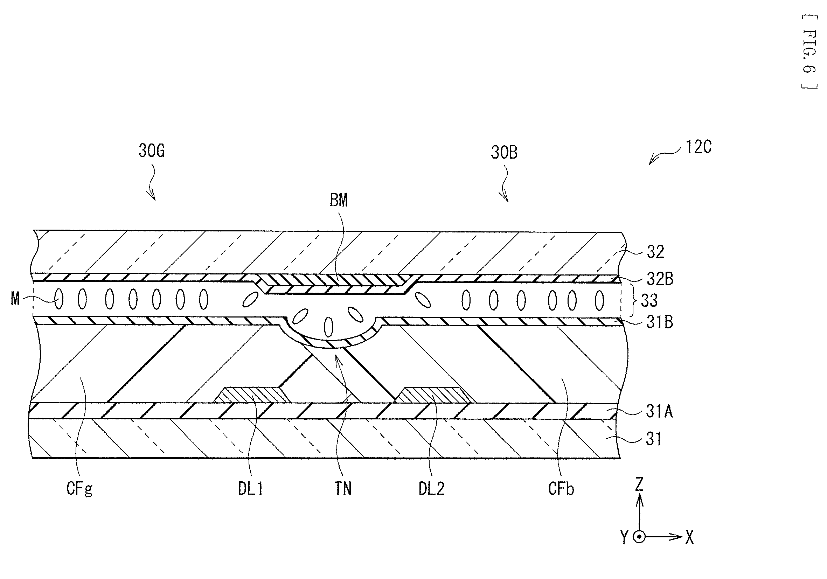

   Fig. 6 is a cross-sectional view illustrating a configuration of a border between a liquid crystal display element in green and a liquid crystal display element in blue, in a display region of the liquid crystal cell illustrated in Fig. 5.
[Fig. 7]

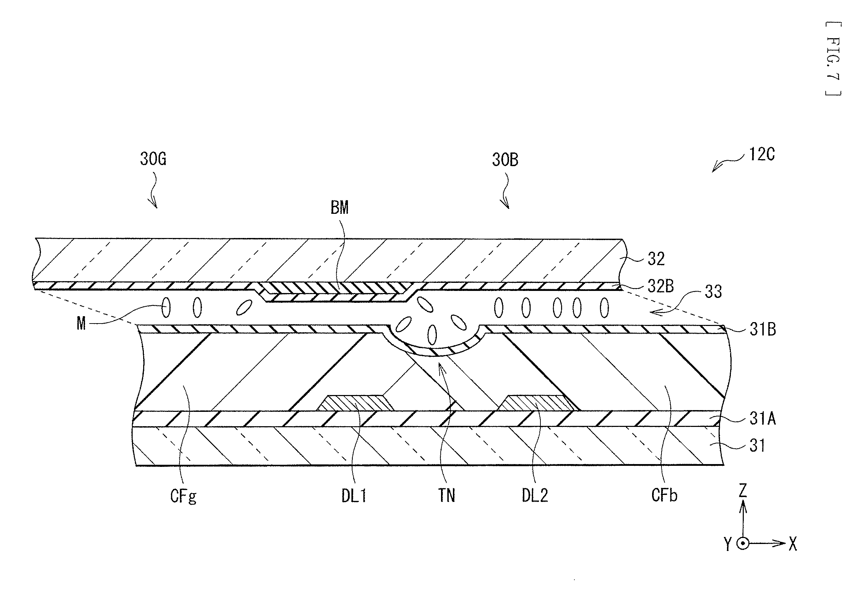

   Fig. 7 is a cross-sectional view illustrating deviation in relative positional relation between a black matrix, and a data line and a color filter, resulting from curvature of the liquid crystal panel.
[Fig. 8]

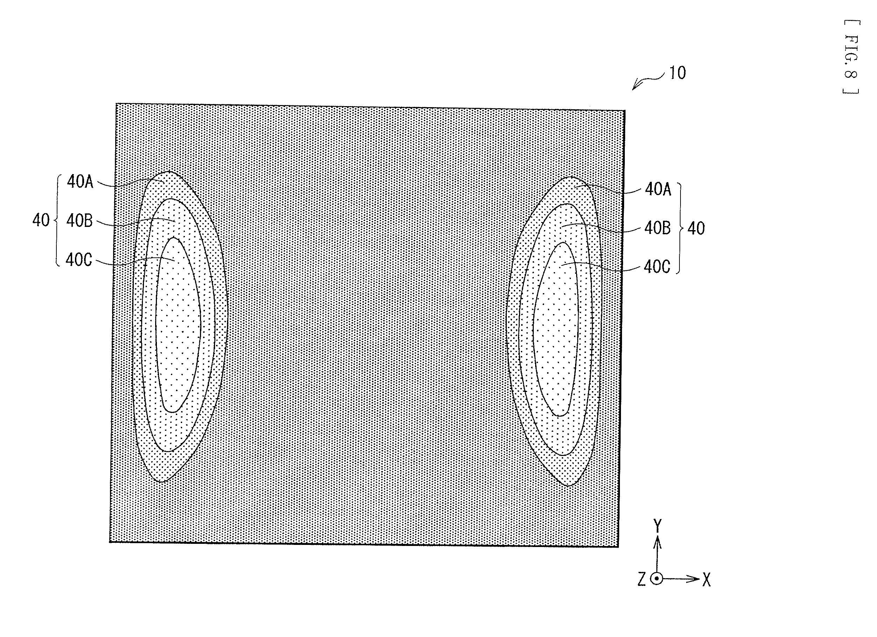

   Fig. 8 is a planar view schematically illustrating a display defect due to the deviation in the relative positional relation between the black matrix, and the data line and the color filter, in the curved liquid crystal panel.
[Fig. 9]

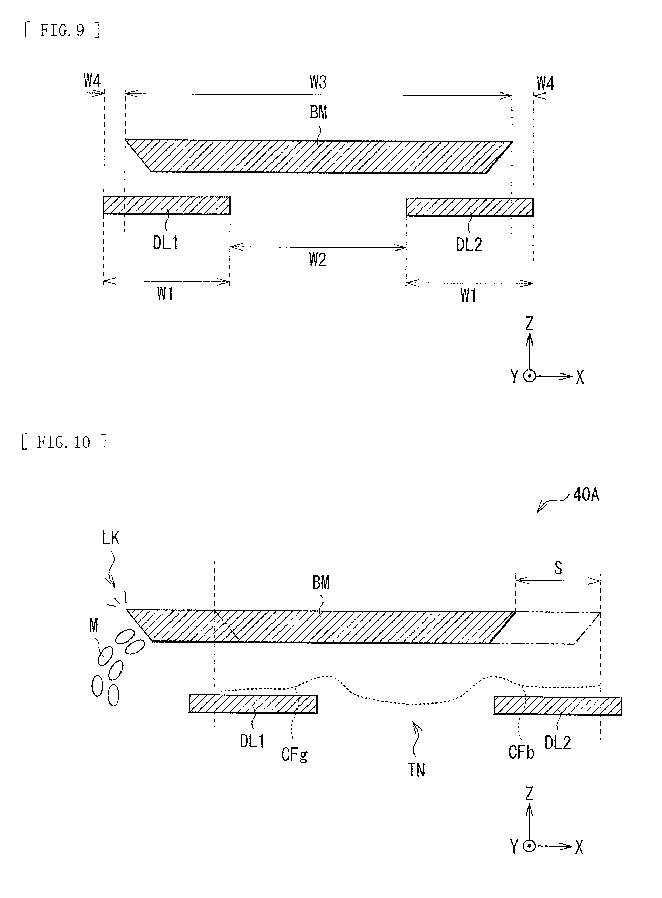

   Fig. 9 is a cross-sectional view illustrating the relative positional relation between the black matrix, and the data line and the color filter, in a flat panel.
[Fig. 10]
   Fig. 10 is a cross-sectional view illustrating a state of positional displacement of the black matrix with respect to the data line and the color filter, in a color band illustrated in Fig. 8.
[Fig. 11]

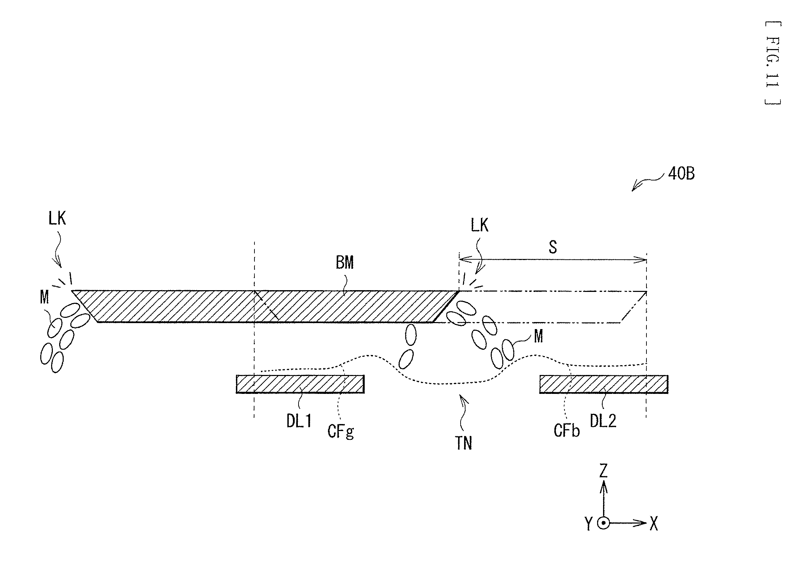

   Fig. 11 is a cross-sectional view illustrating a state of positional displacement of the black matrix with respect to the data line and the color filter, in a neutral band illustrated in Fig. 8.
[Fig. 12]

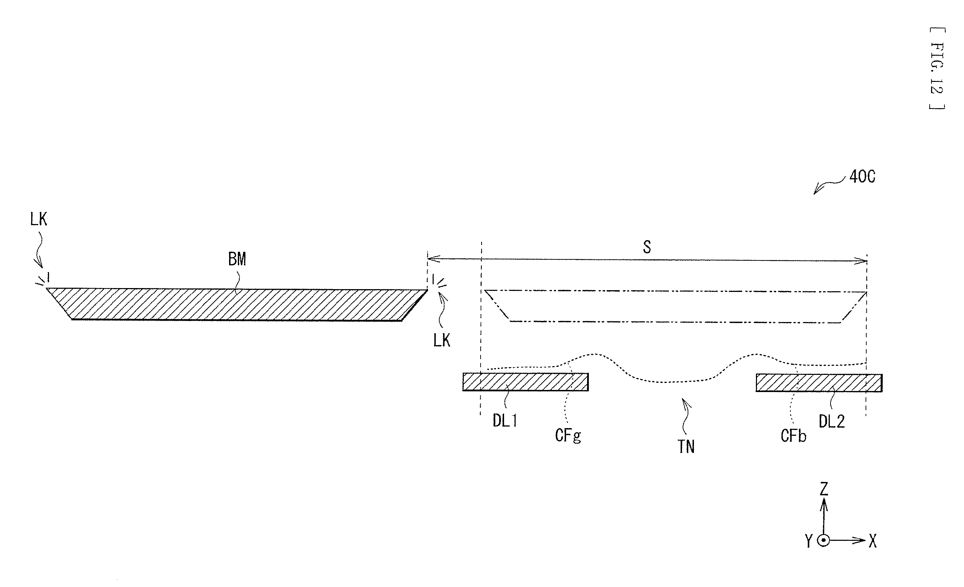

   Fig. 12 is a cross-sectional view illustrating a state of positional displacement of the black matrix with respect to the data line and the color filter, in a high leakage region illustrated in Fig. 8.
[Fig. 13]

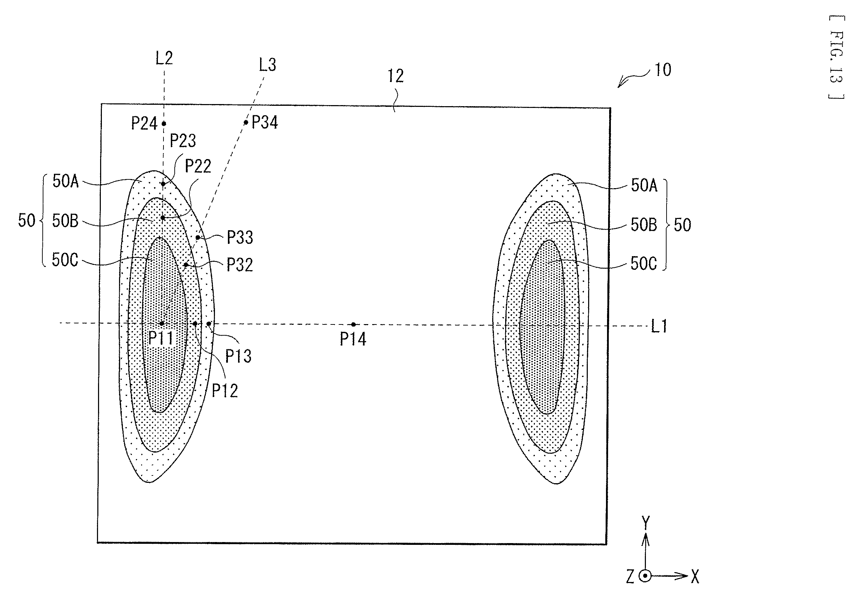

   Fig. 13 is a planar view illustrating one example in which an adjustment region configured of plural regions that form a multiple annular pattern is provided in the liquid crystal panel.
[Fig. 14]

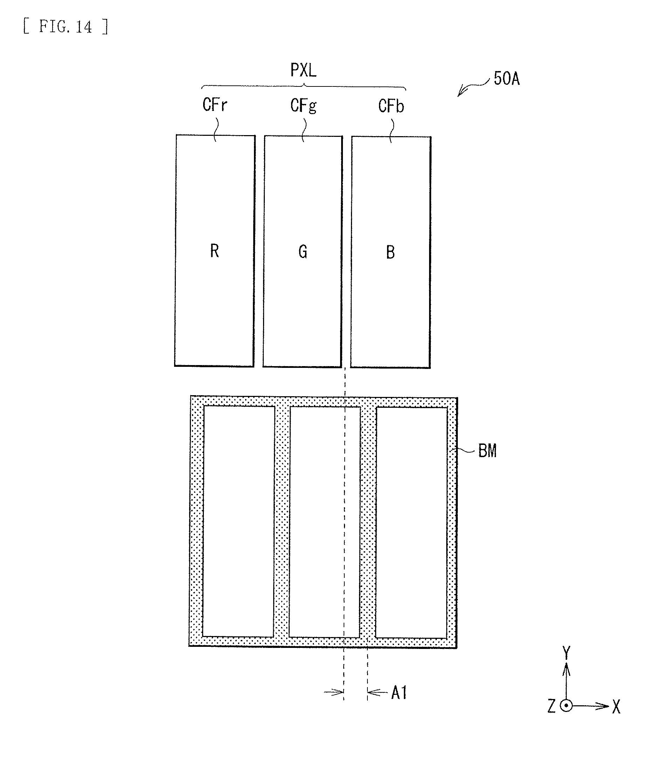

   Fig. 14 is a planar view illustrating a displacement correction amount of the black matrix of each pixel in an outermost region illustrated in Fig. 13.
[Fig. 15]

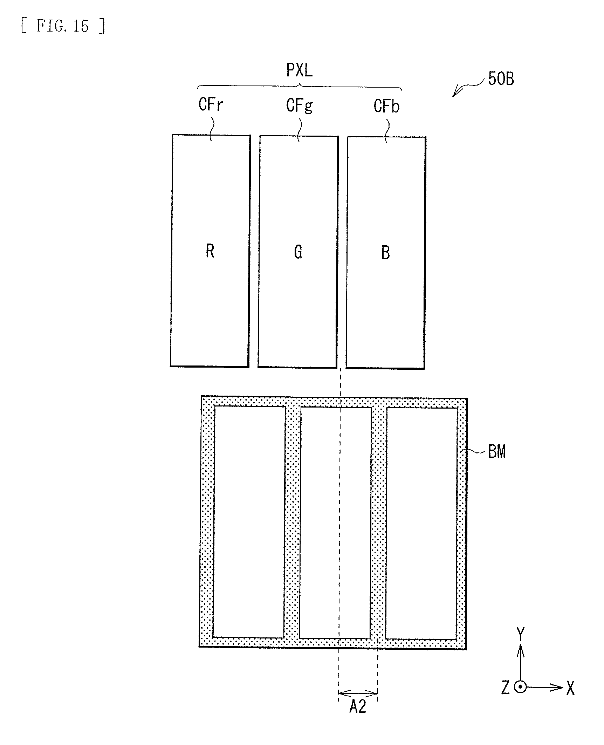

   Fig. 15 is a planar view illustrating the displacement correction amount of the black matrix of each pixel in an intermediate region illustrated in Fig. 13.
[Fig. 16]

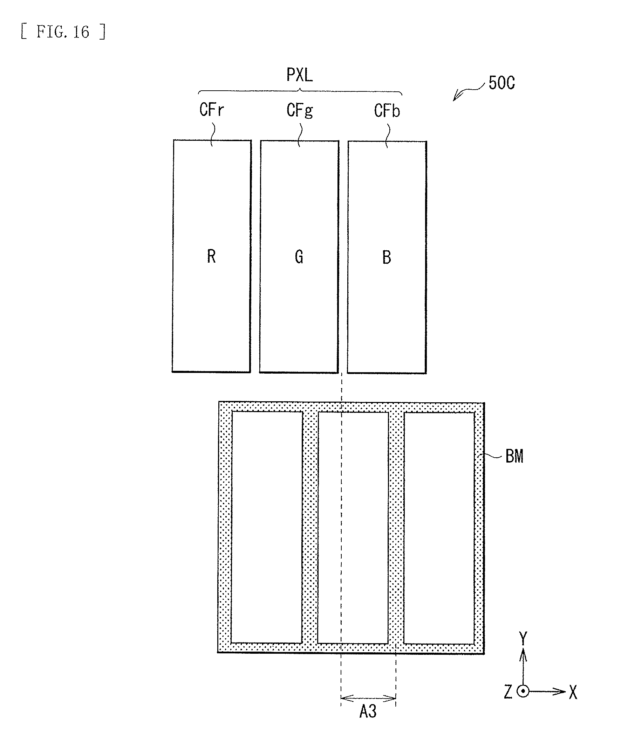

   Fig. 16 is a planar view illustrating the displacement correction amount of the black matrix of each pixel in an innermost region illustrated in Fig. 13.
[Fig. 17]

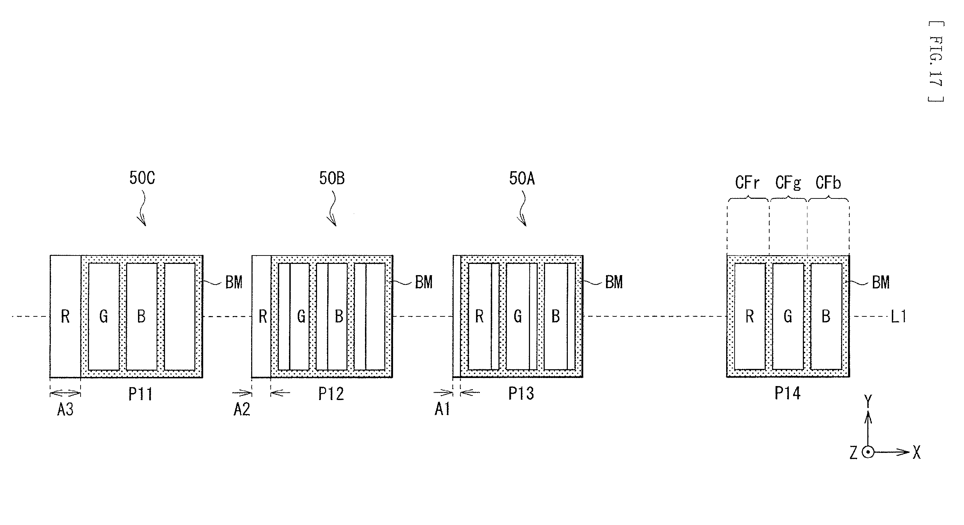

   Fig. 17 is a diagram schematically illustrating, along a line in an X direction, correspondence relation between distribution of the displacement correction amounts illustrated in Figs. 14 to 16 and the plural regions of the adjustment region illustrated in Fig. 13.
[Fig. 18]

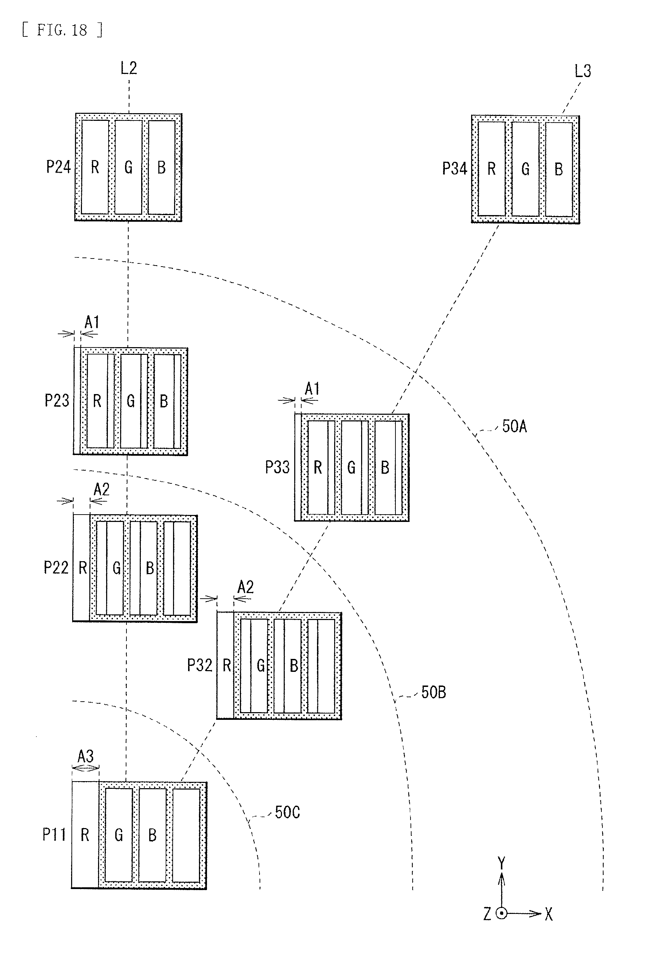

   Fig. 18 is a diagram schematically illustrating, along a line in a Y direction and along an oblique line, the correspondence relation between the distribution of the displacement correction amounts illustrated in Figs. 14 to 16 and the plural regions of the adjustment region illustrated in Fig. 13.
[Fig. 19]

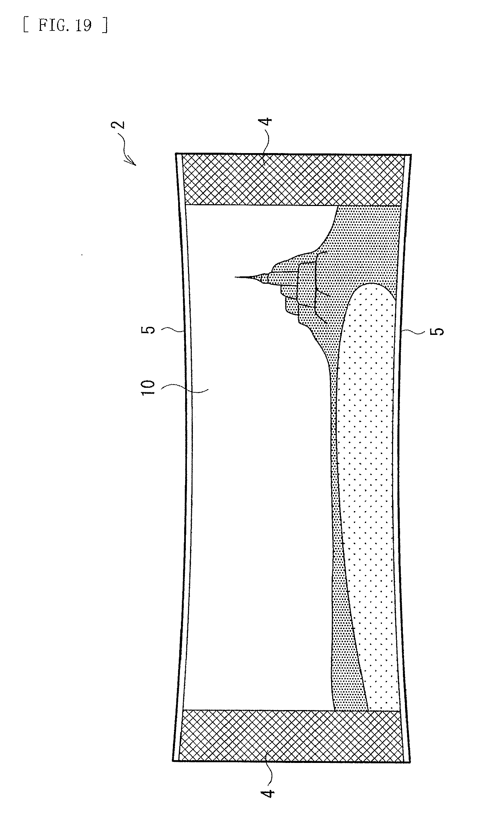

   Fig. 19 is a diagram schematically illustrating one example of a display state in the display device illustrated in Fig. 1.
[Fig. 20]

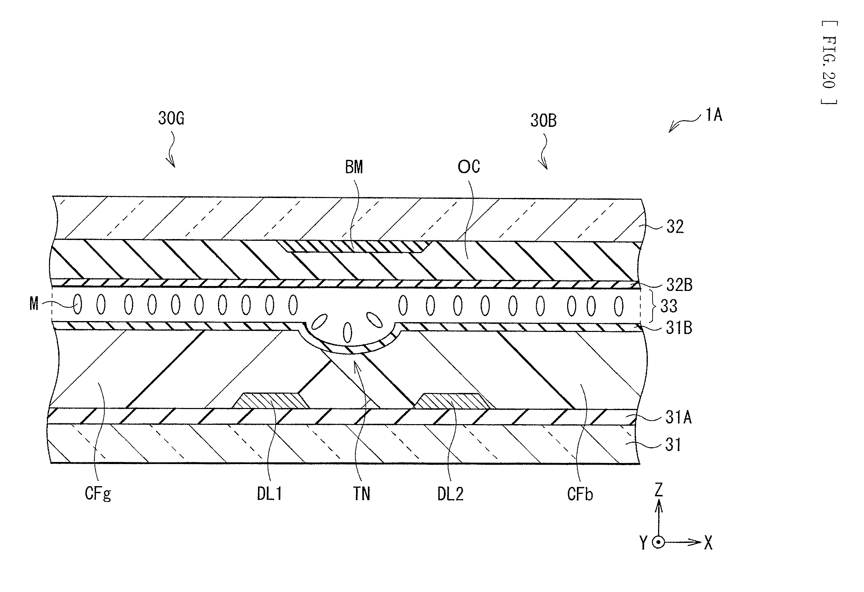

   Fig. 20 is a cross-sectional view illustrating a configuration of a border between a liquid crystal display element in green and a liquid crystal display element in blue, in a display region of a liquid crystal panel according to a modification example 1.
[Fig. 21]

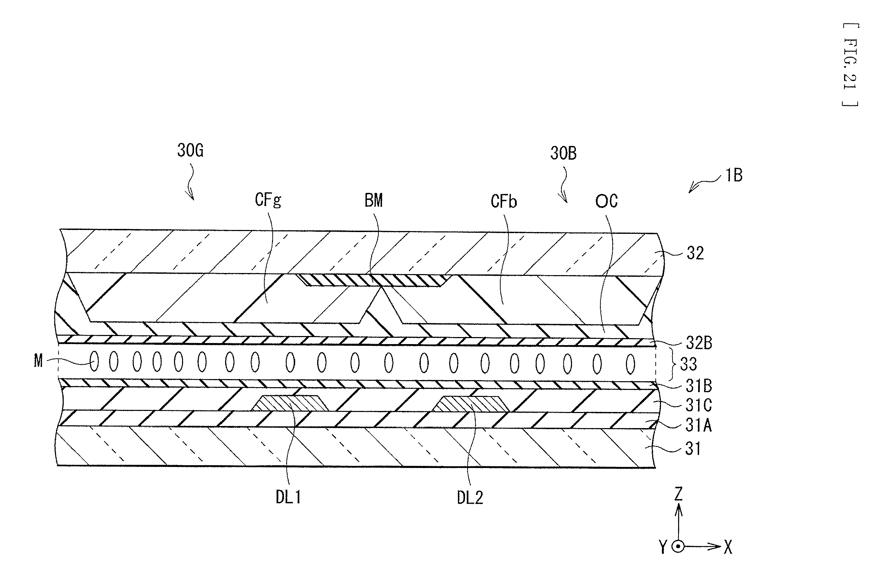

   Fig. 21 is a cross-sectional view illustrating a configuration of a border between a liquid crystal display element in green and a liquid crystal display element in blue, in a display region of a liquid crystal panel according to a modification example 2.
[Fig. 22]

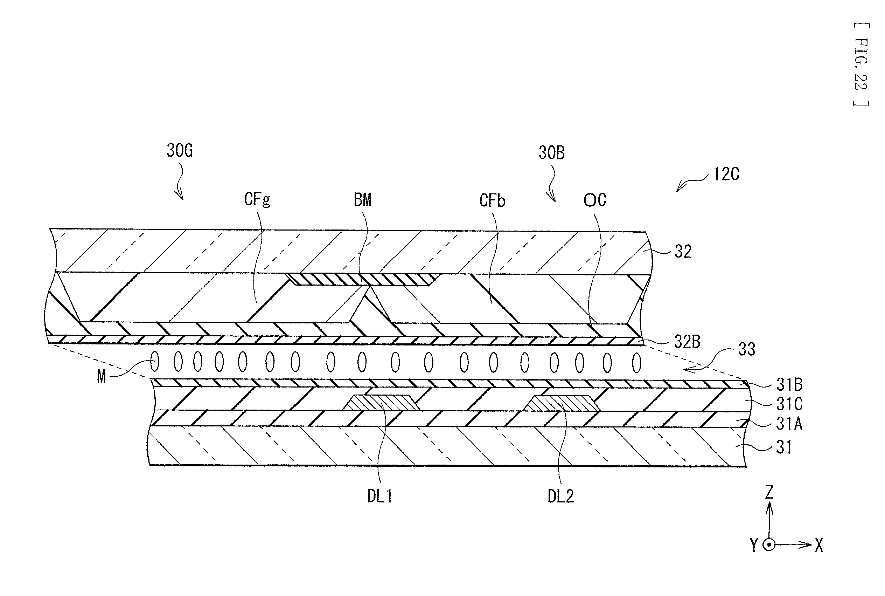

   Fig. 22 is a cross-sectional view illustrating a state to which no correction of positional displacement due to curvature is applied, in the liquid crystal panel illustrated in Fig. 21.
[Fig. 23]

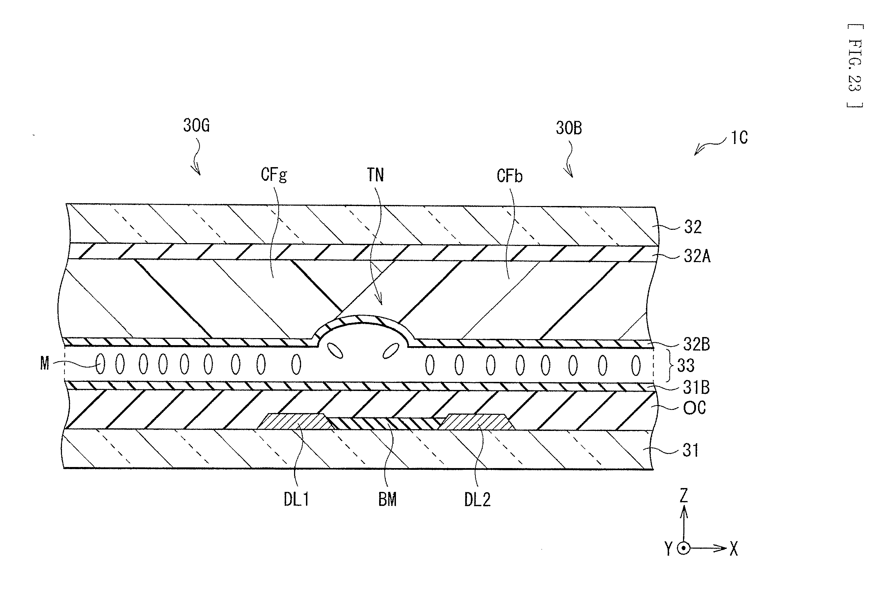

   Fig. 23 is a cross-sectional view illustrating a configuration of a border between a liquid crystal display element in green and a liquid crystal display element in blue, in a display region of a liquid crystal panel according to a modification example 3.
[Fig. 24]

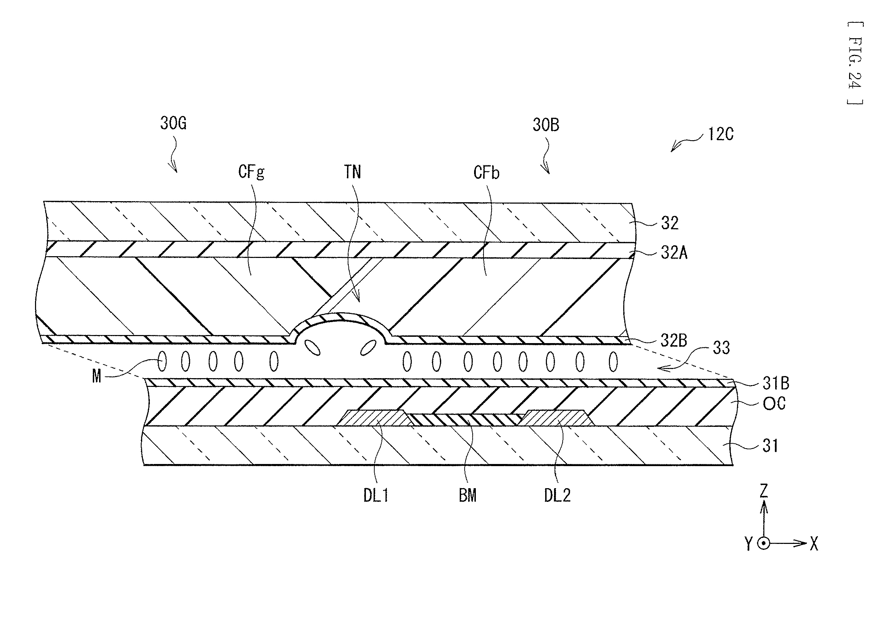

   Fig. 24 is a cross-sectional view illustrating a state to which no correction of positional displacement due to curvature is applied, in the liquid crystal panel illustrated in Fig. 23.
[Fig. 25]

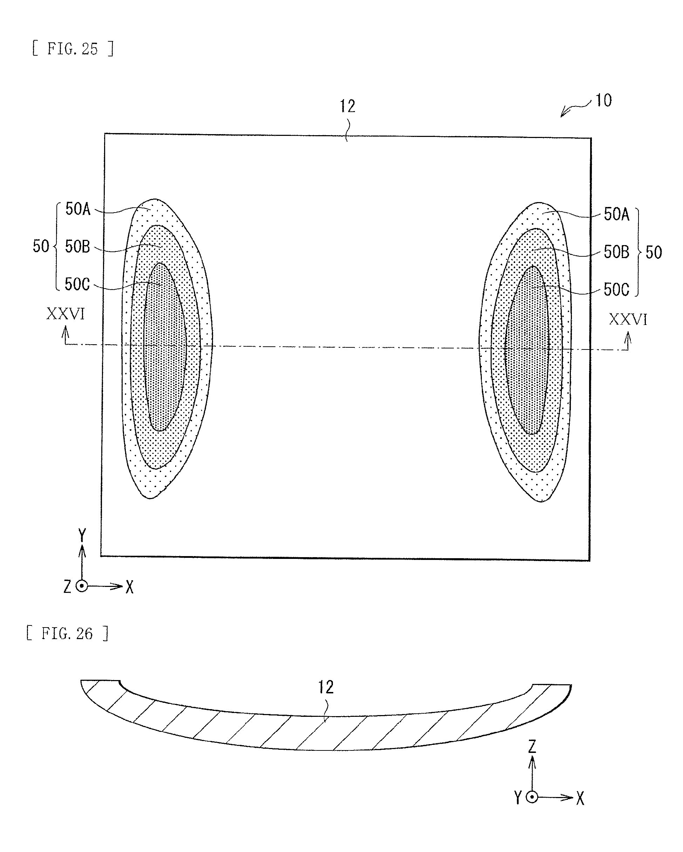

   Fig. 25 is a planar view illustrating a shape of a liquid crystal panel of a display device according to a modification example 4 and one example arrangement of a multiple annular pattern of an adjustment region.
[Fig. 26]
   Fig. 26 is a cross-sectional view along a line XXVI-XXVI in Fig. 25.
[Fig. 27]

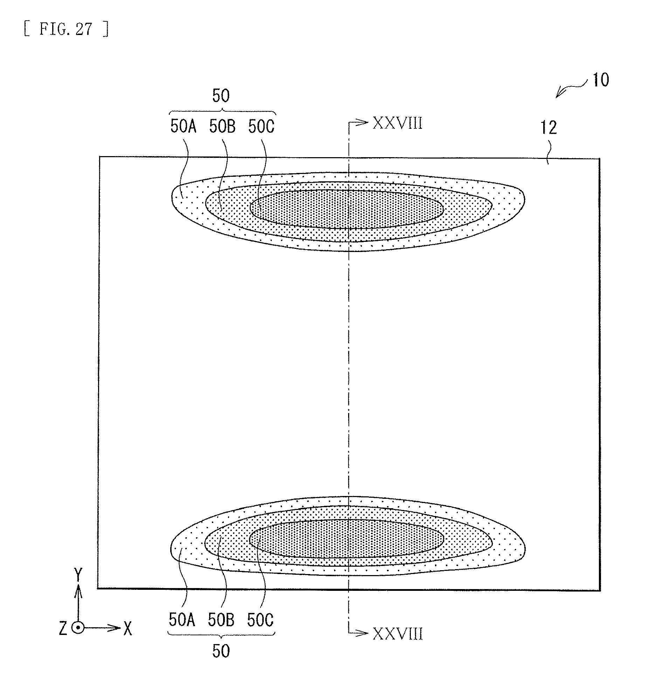

   Fig. 27 is a planar view illustrating a shape of a liquid crystal panel of a display device according to a modification example 5 and one example arrangement of a multiple annular pattern of an adjustment region.
[Fig. 28]

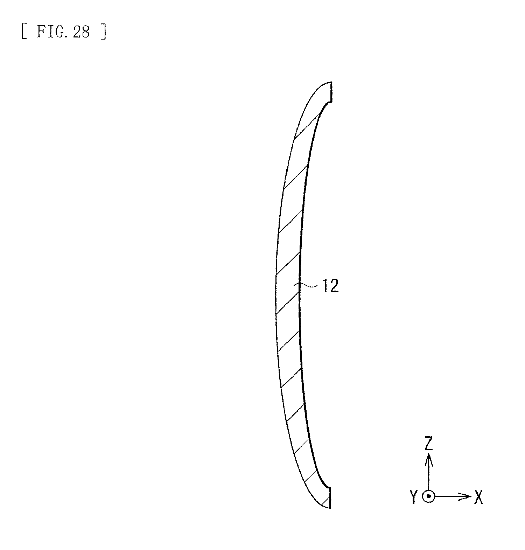

   Fig. 28 is a cross-sectional view along a line XXVIII-XXVIII in Fig. 27.
[Fig. 29]

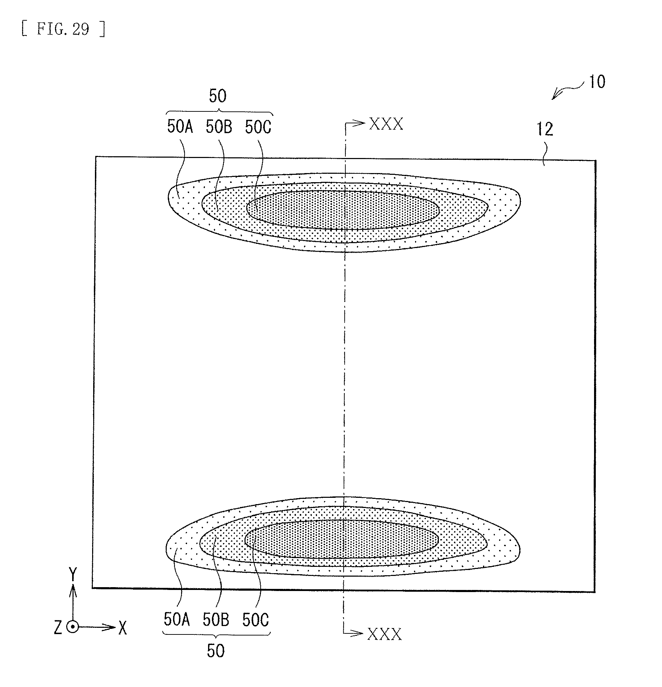

   Fig. 29 is a planar view illustrating a shape of a liquid crystal panel of a display device according to a modification example 6 and one example arrangement of a multiple annular pattern of an adjustment region.
[Fig. 30]

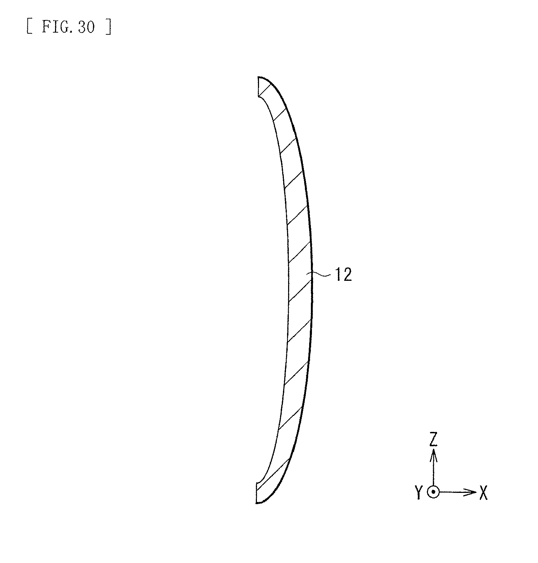

   Fig. 30 is a cross-sectional view along a line XXX-XXX in Fig. 29.
[Fig. 31]

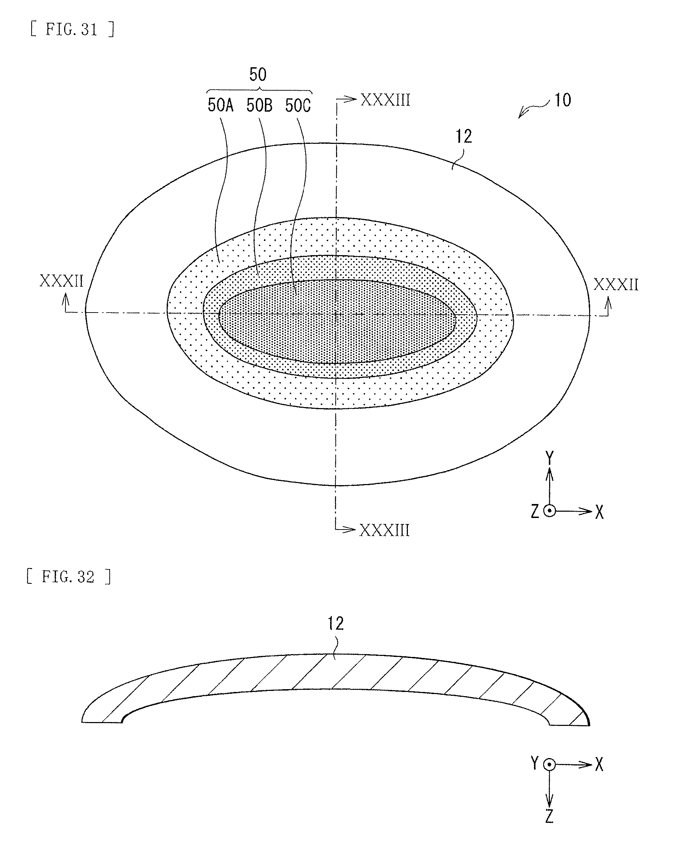

   Fig. 31 is a planar view illustrating a shape of a liquid crystal panel of a display device according to a modification example 7 and one example arrangement of a multiple annular pattern of an adjustment region.
[Fig. 32]
   Fig. 32 is a cross-sectional view along a line XXXII-XXXII in Fig. 31.
[Fig. 33]

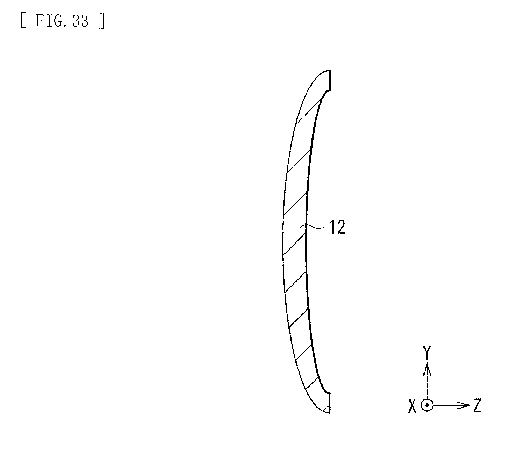

   Fig. 33 is a cross-sectional view along a line XXXIII-XXXIII in Fig. 31.
[Fig. 34]

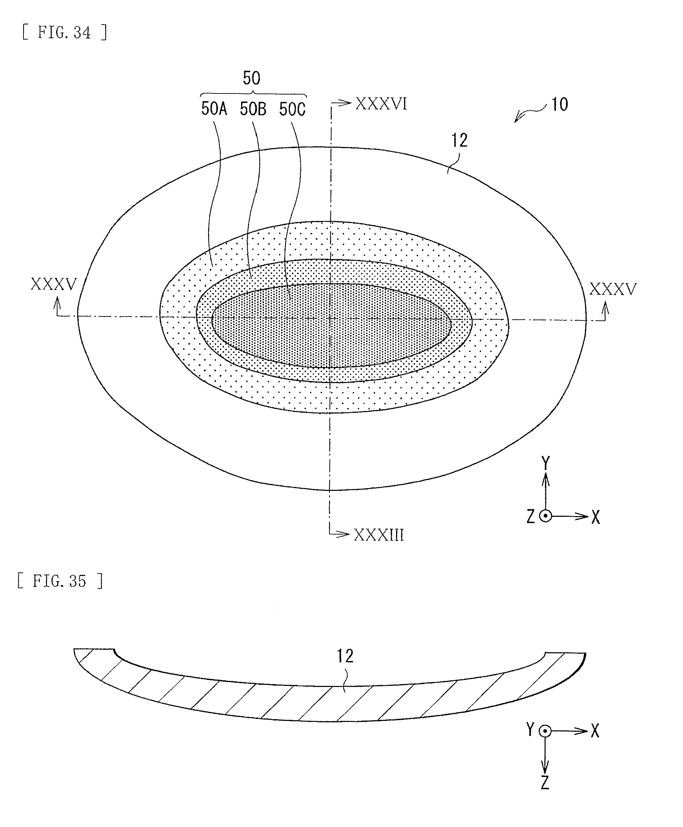

   Fig. 34 is a planar view illustrating a shape of a liquid crystal panel of a display device according to a modification example 8 and one example arrangement of a multiple annular pattern of an adjustment region.
[Fig. 35]
   Fig. 35 is a cross-sectional view along a line XXXV-XXXV in Fig. 34.
[Fig. 36]

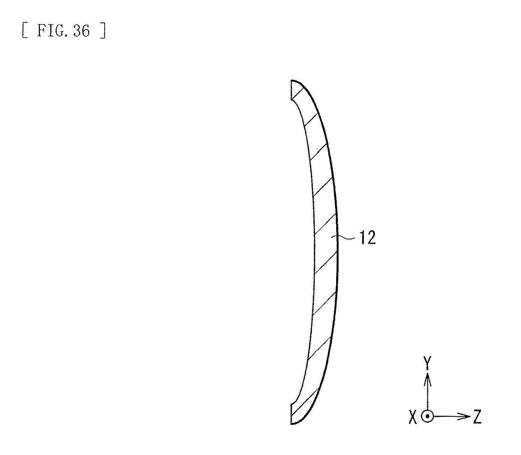

   Fig. 36 is a cross-sectional view along a line XXXVI-XXXVI in Fig. 34.
[Fig. 37]

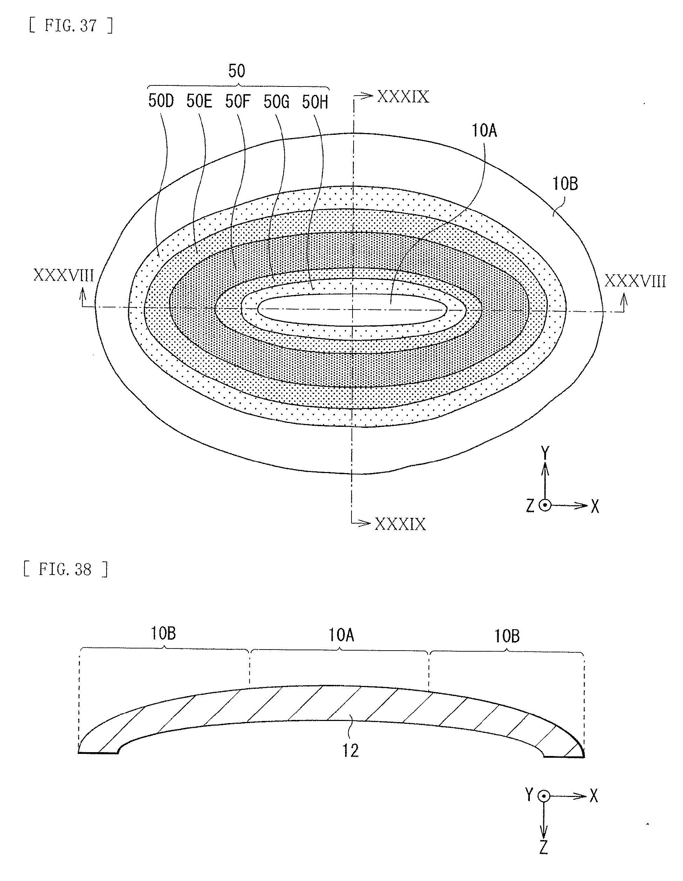

   Fig. 37 is a planar view illustrating a shape of a liquid crystal panel of a display device according to a modification example 9 and one example arrangement of a multiple annular pattern of an adjustment region.
[Fig. 38]
   Fig. 38 is a cross-sectional view along a line XXXVIII-XXXVIII in Fig. 37.
[Fig. 39]

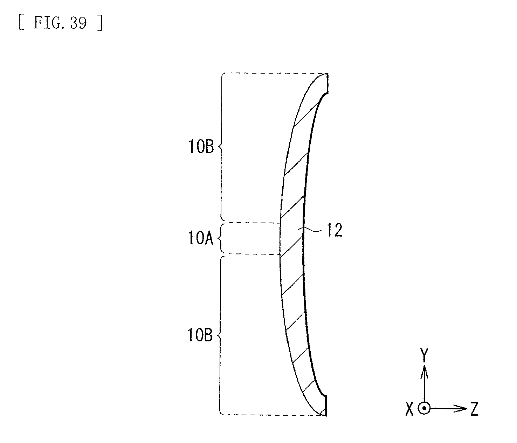

   Fig. 39 is a cross-sectional view along a line XXXIX-XXXIX in Fig. 37.
[Fig. 40]

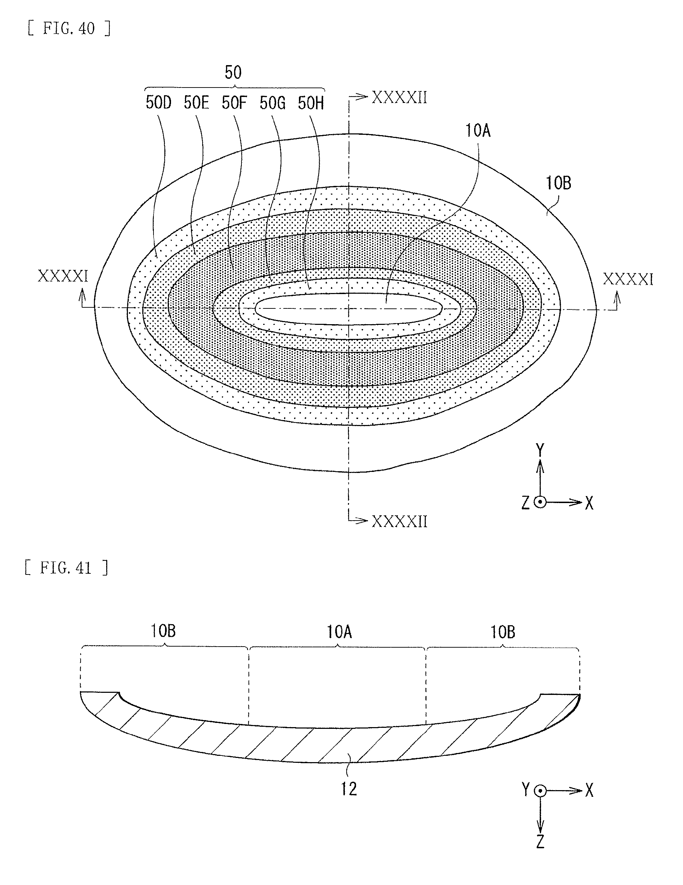

   Fig. 40 is a planar view illustrating a shape of a liquid crystal panel of a display device according to a modification example 10 and one example arrangement of a multiple annular pattern of an adjustment region.
[Fig. 41]
   Fig. 41 is a cross-sectional view along a line XXXXI-XXXXI in Fig. 40.
[Fig. 42]

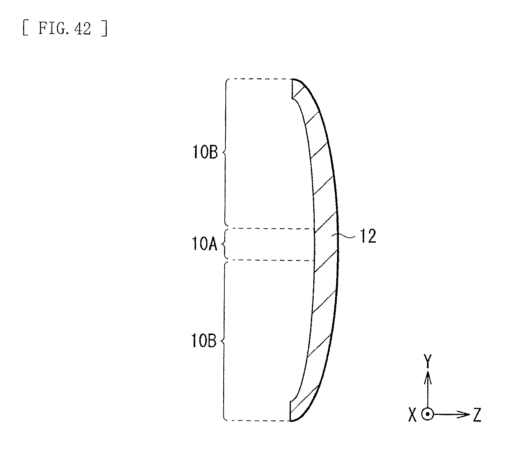

   Fig. 42 is a cross-sectional view along a line XXXXII-XXXXII in Fig. 40.
[Fig. 43]

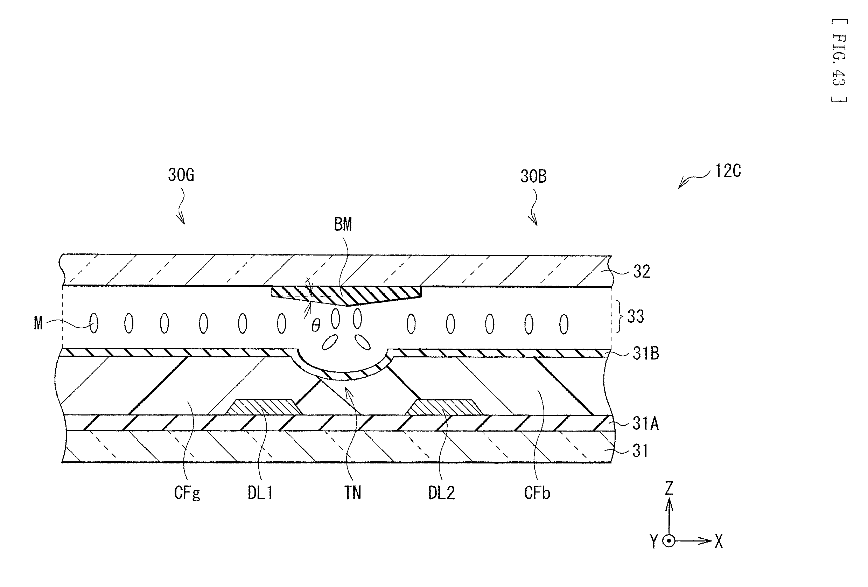

   Fig. 43 is a cross-sectional view of a liquid crystal panel of a display device according to a modification example 11.
[Fig. 44]

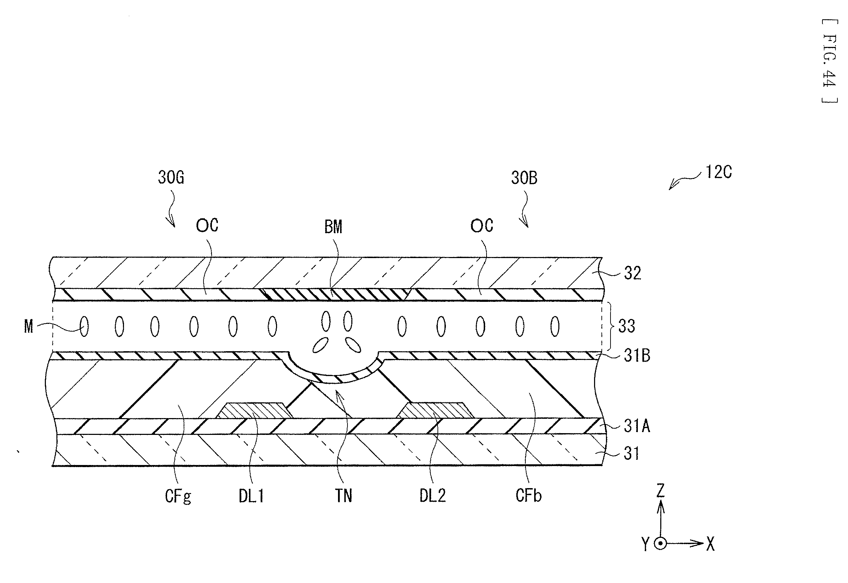

   Fig. 44 is a cross-sectional view of a liquid crystal panel of a display device according to a modification example 12.
[Fig. 45]

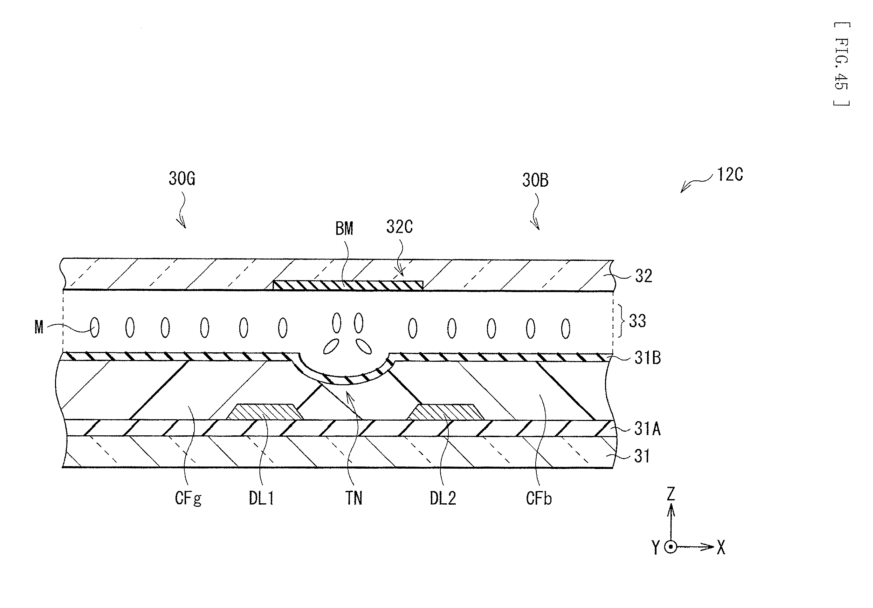

   Fig. 45 is a cross-sectional view of a liquid crystal panel of a display device according to a modification example 13.
[Fig. 46]

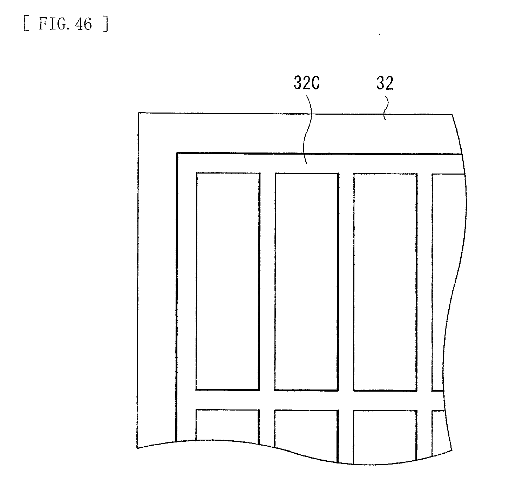

   Fig. 46 is a planar view of a second substrate illustrated in Fig. 45.

### Description of Embodiments

In the following, some embodiments of the present disclosure will be described in detail with reference to the drawings. It is to be noted that description will be made in the following order.
1. Embodiment (an example of a COA (Color filter On Array) structure)
2. Modification Example 1 (an example in which an overcoat layer is provided on a black matrix)
3. Modification Example 2 (an example of an ordinary structure)
4. Modification Example 3 (an example of a BOA (Black matrix On Array) structure)
5. Modification Example 4 (an example of a convex rectangular panel curved in an X direction)
6. Modification Example 5 (an example of a concave rectangular panel curved in a Y direction)
7. Modification Example 6 (an example of a convex rectangular panel curved in the Y direction)
8. Modification Example 7 (an example of a concave spherical, elliptic panel)
9. Modification Example 8 (an example of a convex spherical, elliptic panel)
10. Modification Example 9 (an example of a concave spherical, elliptic panel with a planar center portion)
11. Modification Example 10 (an example of a convex spherical, elliptic panel with a planar center portion)
12. Modification Example 11 (an example in which an end surface of the black matrix has a smaller inclination angle)
13. Modification Example 12 (an example in which the black matrix and the overcoat layer are level with each other)
14. Modification Example 13 (an example in which the black matrix is embedded in a recess of a second substrate, with the overcoat layer omitted)

Fig. 1 illustrates an appearance of a display device according to an embodiment of the present disclosure, viewed from a front surface side. Fig. 2 illustrates an appearance of the display device viewed from a back surface side. A display device 1 may be used as, for example, a television device, and may have a configuration in which a main body 2 for image display is supported by stands 3A and 3B (hereinafter collectively called a stand 3). The main body 2 may be shaped in a planar plate. It is to be noted that the display device 1 may be used as a stationary type that may be placed on a horizontal plane such as a floor, a shelf, a table, etc. in a state with the stand 3 attached to the main body 2. However, the display device 1 may also be used as a wall-mounted type in a state with the stand 3 detached from the main body 2.

In the specification, a front-rear direction of the main body 2 may be called a Z direction; a horizontal direction and a vertical direction in a main surface (a largest surface) of the main body 2 may be called an X direction and a Y direction, respectively.

The main body 2 may include, as a display panel, a liquid crystal panel 10, for example. Front exterior members 4 may be attached to right and left ends of the main body 2. The front exterior members 4 are configured to screen speakers which are described later. Decorative members (front bezels) 5 may be put on upper and lower sides of the liquid crystal panel 10 and the front exterior members 4. A back surface of the main body 2 may be covered with a rear exterior member (a rear cover) 6.

Fig. 3 illustrates an internal configuration in a center portion of the liquid crystal panel 10 illustrated in Fig. 1, in cross-section parallel to the Y direction. The liquid crystal panel 10 may include a front casing (a top chassis) 11, a liquid crystal cell 12, an intermediate casing (a middle chassis) 13, optical sheets 14, a light guide plate 15, and a reflection plate 16 in the order named from front toward rear in the Z direction. It is to be noted that, behind the reflection plate 16, there may be provided a plate member 17 which is described later.

The front casing 11 may be a metal component that covers a front periphery of the liquid crystal panel 10. The liquid crystal cell 12 may have a configuration in which, for example, a liquid crystal layer (not illustrated in Fig. 3, refer to Fig. 6) is sealed between a first substrate 31 (a TFT substrate) and a second substrate 32 (an opposite substrate). The liquid crystal cell 12 may include, for example, a source driver (not illustrated) and a source substrate 12A. The liquid crystal cell 12 and the source substrate 12A may be coupled to each other through a COF (Chip on Film) 12B. The intermediate casing 13 may be a frame-shaped resin component that supports the liquid crystal cell 12 and the optical sheets 14. The optical sheets 14 may include, for example, a diffusion plate, a diffusion sheet, a lens film, a polarized light separation sheet, etc. The light guide plate 15 is configured to guide light from a light source (not illustrated) to the liquid crystal panel 10 side. The light guide plate 15 may mainly include, for example, a transparent thermo-setting resin such as a polycarbonate resin (PC) or an acrylic resin (for example, PMMA (polymethyl methacrylate)). The reflection plate 16 is configured to allow light exited toward a rear side of the light guide plate 15 to return toward the light guide plate 15. The reflection plate 16 may be a plate-like or sheet-like member such as foamed PET (polyethylene terephthalate), a silver-evaporated film, a multi-layered reflective film, or white-color PET.

Main components (except for frame-shaped components and substrates) of the liquid crystal panel 10, i.e., the liquid crystal cell 12, the optical sheets 14, the light guide plate 15, and the reflection plate 16 may be all configured of thin plate-like or sheet-like flexible members made of glass or a resin. This may allow the liquid crystal panel 10 to have flexibility as a whole.

Moreover, as illustrated in Fig. 1, the liquid crystal panel 10 may be curved one-dimensionally in the X direction. Specifically, for example, as illustrated in Fig. 4, the liquid crystal panel 10 may desirably have an arc shape curved convexly rearward (toward a back surface side) in X-Z cross-section. In this way, when an observer sees the liquid crystal panel 10 from the front, the center portion may be visually recognized to be gradually narrowed than right and left portions (refer to Fig. 19). Hence, it is possible to give sense of unity and feeling of immersion by a visual effect of perspective.

A curved shape of the liquid crystal panel 10 may be preferably uniform in the Y direction. When a radius of curvature varies in the Y direction, a twist may be locally generated in the liquid crystal panel 10, causing damage to the liquid crystal panel 10 or leading to possibility of display defects.

Furthermore, on right and left sides of the liquid crystal panel 10 (on right and left ends of the main body 2), the speakers (not illustrated) may be provided. The speakers may be disposed inside the front exterior members 4 illustrated in Fig. 1. With the speakers thus provided on the right and the left ends of the main body 2, picture and sound may be unified without visually separated, making it possible to further enhance the sense of unity and the feeling of immersion, in association with the above-described visual effect of perspective resulting from curvature of the liquid crystal panel 10.

Referring to Fig. 3, the plate member 17 is configured to keep the liquid crystal panel 10 curved at a desired curvature. The plate member 17 may be configured of, for example, a flexible plate that is made of a metal or a resin and has a size enough to cover the whole back surface of the liquid crystal panel 10. The plate member 17 may maintain a desired curved shape with a frame member (not illustrated) that has a bent or curved shape and is fixed with screws etc. to a rear surface of the plate member 17, for example.

Referring to Figs. 1 and 2, the stand 3 may be preferably provided, for example, under the right and the left ends of the main body 2. One reason may be as follows. When the liquid crystal panel 10 is curved convexly rearward, the right and the left ends may be positioned forward with respect to the center of gravity of the liquid crystal panel 10. This may allow the stand 3 to be hidden by the main body 2, making it possible to make protrusion of the stand 3 forward from the main body 2 to be inconspicuous, as compared to a case in which the liquid crystal panel 10 is flat. Also, since the speakers are provided on the right and the left ends of the main body 2, laying the stand 3 under the right and the left ends of the main body 2 may make it possible to surely support the speakers.

It is to be noted that the stand 3 may be provided under the center of the main body 2, instead of under the right and the left ends of the main body 2. Moreover, when the liquid crystal panel 10 is steeply curved, the main body 2 may self-stand without the stand 3. The stand 3A on the left side and the stand 3B on the right side in Fig. 2 may be separated from or coupled to each other.

Fig. 5 illustrates a planar configuration of the liquid crystal cell 12 illustrated in Fig. 3. The liquid crystal cell 12 may have a planar shape of a rectangle elongated in the X direction, and may include a display region 12C disposed in a center portion. A sealing frame 12D in a rectangular shape may be provided around the display region 12C.

In the display region 12C, a plurality of pixels PXL may be arranged in a two-dimensional array (for example, 6 rows by 9 columns in Fig. 5). Each pixel PXL may include, for example, a liquid crystal display element 30R in red, a liquid crystal display element 30G in green, and a liquid crystal display element 30B in blue. The liquid crystal display elements 30R (30G or 30B) in a same color may be arranged in a same column.

The sealing frame 12D is configured to seal liquid crystal inside. The sealing frame 12D may also have a function of an adhesion layer that bonds the first substrate 31 and the second substrate 32 together. In other words, the liquid crystal cell 12 may have a configuration in which the first substrate 31 and the second substrate 32 are bonded together to fix their outer peripheries. It is to be noted that the sealing frame 12D is shaded in Fig. 5. The sealing frame 12D may be configured of, for example, a thermo-setting resin or an ultraviolet curing resin.

Fig. 6 illustrates a cross-sectional configuration of the display region 12C of the liquid crystal cell 12. Specifically, Fig. 6 illustrates a cross-sectional configuration of a border between the liquid crystal display element 30G in green and the liquid crystal display element 30B in blue illustrated in Fig. 5. The liquid crystal cell 12 may have a configuration in which the first substrate 31 and the second substrate 32 face each other with the liquid crystal layer 33 sealed in between, as described above. The first substrate 31 and the second substrate 32 each may be configured of, for example, a glass substrate.

The liquid crystal panel 10 may be, for example, of a VA (Vertical Alignment) mode. One advantage of the VA mode, as compared to an IPS (In Plane Switching) mode, may lie in that backlight illumination is hardly affected by liquid crystal molecules M when a voltage is OFF, and is almost completely shielded by a polarization plate. In other words, considerably pure black can be displayed, making it possible to enhance a contrast ratio. This allows the VA mode to spread widely as liquid crystal panels of television devices with higher image quality.

Moreover, Fig. 6 illustrates a case of, for example, a so-called COA structure in which a color filter CF is provided on the first substrate 31 side. In other words, on the first substrate 31, for example, an interlayer insulating film 31A, data lines DL1 and DL2, a color filter CFg in green, a color filter CFb in blue, and an orientation film 31B may be provided in the order of closeness to the first substrate 31. On the second substrate 32, for example, a black matrix BM and an orientation film 32B may be provided in the order of closeness to the second substrate 32.

The data lines DL1 and DL2, the color filters CFg and CFb, and the black matrix BM may be provided in each of the plurality of pixels PXL illustrated in Fig. 5. Also, in the liquid crystal display element 30R in red, a color filter CFr in red (not illustrated in Fig. 6, refer to Figs. 14 to 16) and a data line (not illustrated) may be provided.

Referring to Fig. 6, there may be generated a hollow (a so-called Tsuno region TN) in a surface of the color filter CFb, in an overlapped region in a border between the color filters CFg and CFb. This may apply to an overlapped region in a border between the color filters CFg and CFr, and to an overlapped region in a border between the color filters CFr and CFb.

In the present embodiment, the data lines DL1 and DL2, and the color filters CFg and CFb correspond to a concrete example of a "first structure" in the present disclosure. The black matrix BM corresponds to a concrete example of a "second structure" in the present disclosure.

In the display device 1, relative positional relation between the black matrix BM, and the data lines DL1 and DL2 and the color filters CF and CFb is adjusted two-dimensionally in accordance with a non-planarity characteristic of the liquid crystal panel 10 (the liquid crystal cell 12). Hence, in the display device 1, it is possible to restrain color unevenness and display unevenness and to perform high quality display.

The "non-planarity characteristic" as used here may refer to a measurement value concerning color unevenness or display unevenness based on predetermined picture information. Preferably, the "predetermined picture information" may be, for example, full black. Performing full black display may make it easier to obtain the measurement value concerning color unevenness or display unevenness by virtue of the above-described characteristics of the VA mode.

In the following, description is given in detail on two-dimensional adjustment of the relative positional relation in the present embodiment.

In a flat panel, although not illustrated, the data lines DL1 and DL2, and the color filters CFg and CFb on the first substrate 31 may be so positioned as to face the black matrix BM on the second substrate 32. The backlight illumination may pass through the color filters CFg and CFb to be visually recognized as desired color light.

On the other hand, in a case of a curved panel, since a flat panel is deformed into a curved shape, there may be generated deviation in the relative positional relation between the black matrix BM, and the data lines DL1 and DL2 and the color filters CFg and CFb, as illustrated in Fig. 7. This may cause the backlight illumination to deviate from a predetermined path, causing color unevenness and intensity unevenness. For example, in the COA structure as in the present embodiment, the black matrix BM is affected by the deviation, causing possibility of occurrence of intensity unevenness due to light leakage. On the other hand, as described later, depending on panel configurations, the color filters CFg and CFb may be affected by the deviation, causing possibility of occurrence of color unevenness.

Fig. 8 schematically illustrates a display defect, in the curved liquid crystal display panel 10, resulting from the deviation in the relative positional relation between the black matrix BM, and the data lines DL1 and DL2 and the color filters CFg and CFb. In a case in which the liquid crystal panel 10 is curved one-dimensionally in the X direction, when the liquid crystal panel 10 is allowed to perform full black display, colored unevenness 40 may be generated in an elliptic shape in horizontal symmetry on both ends in a direction of curvature (in the X direction). The unevenness 40 may be observed in a multiple annular pattern, including an outermost color band 40A, a neutral band 40B inside the color band 40A, and an innermost high leakage region 40C. It is to be noted that the unevenness 40 has dependency on view angles, and may be visually recognized not from the front but in an upper oblique direction or in a lower oblique direction.

Fig. 9 illustrates the relative positional relation between the black matrix BM, and the data lines DL1 and DL2 and the color filters CFg and CFb, in a flat panel. In Fig. 9, the data lines DL1 and DL2 face the black matrix BM, with an intermediate position between the data lines DL1 and DL2 aligned with a center of the black matrix BM. It is to be noted that positional displacement small enough to avoid light leakage may be allowable. Widths W1 of the data lines DL1 and DL2 each may be, for example, 6.5 µm. An interval W2 between the data lines DL1 and DL2 may be, for example, 8 µm. A width W3 of the black matrix BM may be, for example, 18 µm. An interval W4 between an end of the data line DL1 or DL2 and an end of the black matrix BM may be, for example, 1.5 µm.

Figs. 10 to 12 illustrate states of positional displacement of the black matrix BM with respect to the data lines DL1 and DL2 and the color filters CFg and CFb, in the color band 40A, the neutral band 40B, and the high leakage region 40C, respectively. It is to be noted that, in Figs. 10 to 12, a state with no positional displacement of the black matrix as illustrated in Fig. 9 is denoted by a two-dotted chain line. Also, in Figs. 10 to 12, the color filters CFg and CFb, and the Tsuno region TN are denoted by a dotted line.

In the color band 40A, as illustrated in Fig. 10, a displacement amount S of the black matrix BM may be small; for example, from 4 µm to 7 µm both inclusive. In this case, one end (a left end in Fig. 10) of the black matrix BM may be displaced from the data line DL1. Since an end surface of the black matrix BM is inclined, orientation of the liquid crystal molecules M may be disturbed, resulting in occurrence of light leakage LK. Another end (a right end in Fig. 10) of the black matrix BM may overlap with the data line DL2, allowing the backlight illumination to be shielded.

In the neutral band 40B, as illustrated in Fig. 11, the displacement amount S of the black matrix BM may be moderate; for example, from 7 µm to 15 µm both inclusive. In this case, one end (the left end in Fig. 11) of the black matrix BM may be displaced from the data line DL1. Since the end surface of the black matrix BM is inclined, the orientation of the liquid crystal molecules M may be disturbed, resulting in the occurrence of the light leakage LK. Also, another end (the right end in Fig. 11) of the black matrix BM may be displaced from the data line DL2, and may face the Tsuno region TN of the border between the color filters CFg and CFb. Since the end surface of the black matrix BM is inclined, the orientation of the liquid crystal molecules M may be disturbed, resulting in the occurrence of the light leakage LK.

In the high leakage region 40C, as illustrated in Fig. 12, the displacement amount S of the black matrix BM may be large; for example, equal to or larger than 20 µm. In this case, both ends of the black matrix BM may be displaced from the data lines DL1 and DL2, resulting in the occurrence of the light leakage LK.

It is to be noted that, when the liquid crystal panel 10 is curved convexly rearward (to the back surface side) as illustrated in Fig. 4, the displacement of the black matrix BM may be generated rightward in a right region and leftward in a left region, on a screen viewed from the front.

As described above, even when the liquid crystal panel 10 is curved one-dimensionally in the X direction, the unevenness 40 or the displacement amount S of the black matrix BM may exhibit two-dimensional distribution in a multiple annular pattern. Accordingly, in the present embodiment, the relative positional relation between the data lines DL1 and DL2 and the color filters CFg and CFb, and the black matrix BM is adjusted two-dimensionally in accordance with the non-planarity characteristic, that is, the distribution of the unevenness 40 or the amount S of displacement of the black matrix BM.

Specifically, the liquid crystal panel 10 may preferably include an adjustment region 50, as illustrated in Fig. 13. The adjustment region 50 may be a region to which two-dimensional adjustment of the relative positional relation between the data lines DL1 and DL2 and the color filters CFg and CFb, and the black matrix BM is applied.

In the adjustment region 50, preferably, a displacement correction amount A may be provided for each of the plurality of pixels PXL. Preferably, the displacement correction amount A may be an amount of correction of displacement of the data lines DL1 and DL2 and the color filters CFg and CFb with respect to the black matrix BM in the direction of the curvature (in the X direction) and may vary two-dimensionally over the plurality of pixels PXL. In this way, it is possible to adjust two-dimensionally distribution of the displacement correction amount A in accordance with the distribution of the unevenness 40 (the displacement amount S), and to restrain the unevenness 40.

It is to be noted that magnitude of the displacement correction amount A may be same or substantially same as that of the displacement amount S. A direction of the displacement correction amount A may be opposite to that of the displacement amount S. In other words, when the liquid crystal panel 10 is curved convexly rearward (to the back surface side) as illustrated in Fig. 4, the direction of the displacement correction amount A may be leftward in a right region and rightward in a left region, on a screen viewed from the front.

Moreover, the displacement correction amount A may be preferably largest in a center portion of the adjustment region 50, and may decrease two-dimensionally from the center portion of the adjustment region 50 toward a peripheral region of the adjustment region 50. One reason may be as follows. When the liquid crystal panel 10 is curved one-dimensionally in the X direction, as illustrated in Figs. 10 to 12, the displacement amount S may be largest in a center region (the high leakage region 40C) of the unevenness 40, and may decrease sequentially toward peripheral regions (the neutral band 40B and the color band 40A) of the unevenness 40.

Furthermore, in the adjustment region 50, as illustrated in Fig. 13 as well, plural regions 50A, 50B, and 50C that form a multiple annular pattern may be preferably provided. Preferably, the displacement correction amount A may be largest in an innermost region 50C of the plural regions 50A to 50C, and may decrease stepwise from the innermost region 50C toward an outermost region 50A. It is sufficient to reduce the positional displacement of the black matrix BM to a degree of hardly generating light leakage. Therefore, providing the displacement correction amount A stepwise for the plural regions 50A to 50C makes it possible to easily obtain similar effects to those obtained by providing the displacement correction amount A individually for each of the pixels PXL.

It is to be noted that there is no limitation on the number of the plural regions 50A to 50C in the adjustment region 50; instead of the triple annular pattern illustrated in Fig. 13, a multiple annular pattern e.g., a double, or quadruple or more annular pattern may be adopted in accordance with the distribution of the unevenness 40 or the displacement amount S of the black matrix BM.

The outermost region 50A may correspond to the color band 40A of the unevenness 40. In the region 50A, as illustrated in Fig. 14, in each pixel PXL, a displacement correction amount A1 of the black matrix BM with respect to the data lines DL1 and DL2 and the color filters CFg and CFb in the direction of the curvature (in the X direction) may be small; for example, from 4 µm to 7 µm both inclusive. It is to be noted that Figs. 14 to 16 illustrate the relative positional relation between the black matrix BM and the color filters CFr, CFg, and CFb with the data lines DL1 and DL2 omitted, for an easier understanding.

The intermediate region 50B may correspond to the neutral band 40B of the unevenness 40. In the region 50B, as illustrated in Fig. 15, in each pixel PXL, a displacement correction amount A2 of the black matrix BM with respect to the data lines DL1, DL2 and color filters CFg and CFb in the direction of the curvature (in the X direction) maybe moderate (A2>A1); for example, from 7 µm to 15 µm both inclusive.

The innermost region 50C may correspond to the high leakage region 40C of the unevenness 40. In the region 50C, as illustrated in Fig. 16, in each pixel PXL, a displacement correction amount A3 of the black matrix BM with respect to the data lines DL1, DL2 and color filters CFg and CFb in the direction of the curvature (in the X direction) may be large (A3>A2>A1); for example, equal to or larger than 20 µm.

Fig. 17 illustrates, along a line L1 in the X direction, correspondence relation between distribution of the displacement correction amounts A1 to A3 illustrated in Figs. 14 to 16 as described above and the regions 50A to 50C of the adjustment region 50 illustrated in Fig. 13. A point P11 may correspond to a center of the region 50C. A point P14 may correspond to a center of the liquid crystal panel 10.

Fig. 18 illustrates, along a line L2 in the Y direction and along an oblique line L3, the correspondence relation between the distribution of the displacement correction amounts A1 to A3 illustrated in Figs. 14 to 16 and the regions 50A to 50C of the adjustment region 50 illustrated in Fig. 13. A point P24 and a point P34 may correspond to vicinity of an upper side of the liquid crystal panel 10.

It is to be noted that Figs. 17 and 18 illustrate a case of a region leftward from the center of the liquid crystal panel 10, in which the black matrix BM is displaced rightward with respect to the color filters CFr, CFg, and CFb. In a case of a region rightward from the center of the liquid crystal panel 10, the displacement may be directed opposite (leftward).

The adjustment region 50 may be preferably provided on both ends in the direction of the curvature (in the X direction) of the liquid crystal panel 10, as illustrated in Fig. 13, in accordance with positions of the occurrence of the unevenness 40. One reason may be as follows. The four sides of the liquid crystal panel 10 are fixed by the sealing frame 12D. Accordingly, when the liquid crystal panel 10 is curved, the displacement amount S of the black matrix BM may be relatively small in vicinity of the sealing frame 12D, and may increase slightly inward from the sealing frame 12D.

The display device 1 may be manufactured, for example, as follows.

First, the first substrate 31 made of glass, etc. may be prepared. On the first substrate 31, a gate electrode (not illustrated) may be formed. Subsequently, the interlayer insulating film 31A and a semiconductor layer (not illustrated) may be formed. Thereafter, the data lines DL1 and DL2, and an interlayer insulating film (not illustrated) may be formed. The color filters CFg and CFb may be formed.

In the meanwhile, the second substrate 32 made of glass, etc. may be prepared. On the second substrate 32, the black matrix BM and an opposite electrode (not illustrated) may be prepared.

Thereafter, the sealing frame 12D may be formed in a frame region of, for example, the first substrate 31. The sealing frame 12D may be configured of a thermo-setting resin or an ultraviolet resin. The sealing frame 12D may be formed in a rectangular shape surrounding the display region 12C.

Subsequently, the orientation film 31B may be formed in the display region 12C of the first substrate 31. Liquid crystal may be dropped inside the sealing frame 12D to form the liquid crystal layer 33. On the other hand, the orientation film 32B may be formed in the display region 12C of the second substrate 32. Thereafter, the first substrate 31 and the second substrate 32 may be arranged to face each other with the sealing frame 12D in between. The resin that constitutes the sealing frame 12D may be cured to allow the first substrate 31 and the second substrate 32 to be bonded together. In this way, the liquid crystal cell 12 illustrated in Figs. 5 and 6 may be formed. The processes so far may be carried out in a state in which the first substrate 31 and the second substrate 32 are planar.

Thereafter, the plate member 17 having desired arc-shaped curvature may be prepared. On one surface of the plate member 17, the reflection plate 16, the light guide plate 15, and the optical sheets 14 may be placed. Also, backlight components such as a heat dissipation plate, a light source (either not illustrated), etc. may be disposed. Subsequently, the intermediate casing 13 may be placed on a periphery of the plate member 17. The liquid crystal cell 12 may be fitted in the intermediate casing 13. The front casing 11 may be attached to the front periphery of the liquid crystal cell 12. Thus, the liquid crystal panel 10 may be formed.

Here, the main components (except for frame-shaped components and substrates) of the liquid crystal panel 10, i.e., the liquid crystal cell 12, the optical sheets 14, the light guide plate 15, and the reflection plate 16 may be all configured of thin plate-like or sheet-like flexible members made of glass or a resin. This may allow the liquid crystal panel 10 to have flexibility as a whole. Accordingly, the liquid crystal panel 10 may be curved in an arc shape in accordance with the plate member 17.

After forming the liquid crystal panel 10, the speakers (not illustrated) may be installed in the front casing 11. The substrates (not illustrated) may be mounted on a rear side of the plate member 17. Thereafter, the speakers (not illustrated) may be screened by the front exterior members 4. The decorative members 5 may be put on the upper and the lower sides of the liquid crystal panel 10 and the front exterior members 4. Thus, the main body 2 may be formed. Thereafter, the back surface of the main body 2 may be covered with the rear exterior member 6. The stand 3 may be attached to under the right and the left ends of the main body 2. Thus, the display device 1 illustrated in Fig. 1 may be completed.

Moreover, in the present embodiment, the relative positional relation between the black matrix BM, and the data lines DL1 and DL2 and the color filters CFg and CFb is adjusted two-dimensionally in accordance with the non-planarity characteristic of the liquid crystal panel 10. Specifically, in the process of forming the black matrix BM, or in the process of forming the data lines DL1 and DL2 and the color filters CFg and CFb, the adjustment region 50 may be formed in a state in which the first substrate 31 and the second substrate 32 are planar. To the adjustment region 50, the two-dimensional adjustment of the relative positional relation between the black matrix BM, and the data lines DL1 and DL2 and the color filters CFg and CFb may be applied. Then, the liquid crystal panel 10 may be curved.

In the following, description is given on an example in which the adjustment region 50 is formed concerning the positional displacement of the black matrix BM in a case of the COA structure illustrated in Fig. 6.

First, as the non-planarity characteristic of the liquid crystal panel 10, the measurement value concerning color unevenness or display unevenness based on the predetermined picture information may be obtained. Based on the measurement value, the displacement amount S of the black matrix BM may be measured or calculated. Specifically, the liquid crystal panel 10 as a test sample may be allowed to perform full black display, to investigate a state of the generation of the unevenness 40 illustrated in Fig. 8 and to investigate the distribution of the displacement amount S of the black matrix BM illustrated in Figs. 10 to 12.

Next, the adjustment region 50 may be provided in accordance with the state of the generation of the unevenness 40 illustrated in Fig. 8, that is, the distribution of the displacement amount S of the black matrix BM illustrated in Figs. 10 to 12. In the adjustment region 50, the displacement correction amount A may be provided for each of the plurality of pixels PXL. The displacement correction amount A may be the amount of the correction of the displacement of the black matrix BM with respect to the data lines DL1 and DL2 and the color filters CFg and CFb in the direction of the curvature (in the X direction), and may vary two-dimensionally over the plurality of pixels PXL.

The displacement correction amount A may be largest in the center region of the adjustment region 50, and may decrease two-dimensionally from the center region of the adjustment region 50 toward the peripheral region of the adjustment region 50, in accordance with the state of the generation of the unevenness 40 illustrated in Fig. 8, that is, the distribution of the displacement amount S of the black matrix BM illustrated in Figs. 10 to 12.

Specifically, as illustrated in Fig. 13, the plural regions 50A to 50C that form the multiple annular pattern may be provided in the adjustment region 50. The displacement correction amount A (the displacement correction amounts A1 to A3 illustrated in Figs. 14 to 18) may be largest in the innermost region 50C of the plural regions 50A to 50C, and may decrease stepwise from the innermost region 50C toward the outermost region 50A.

Then, in the above-described manufacturing method, in the process of forming the black matrix BM on the second substrate 32, the black matrix BM of each pixel PXL in the adjustment region 50 may be formed in an arrangement involving the displacement correction amount A of the plural regions 50A to 50C. In the process of forming the data lines DL1 and DL2 and the color filters CFg and CFb on the first substrate 31, a similar arrangement to that in a case of a flat panel may be possible.

Thereafter, the liquid crystal panel 10 may be fabricated with the above-described manufacturing method, and then, the liquid crystal panel 10 may be curved one-dimensionally in the X direction. At this occasion, in both ends in the direction of the curvature (in the X direction), the black matrix BM may be displaced in the direction of the curvature (in the X direction) with respect to the data lines DL1 and DL2 and the color filters CFg and CFb. However, the arrangement of the black matrix BM of the plurality of pixels PXL in the adjustment region 50 may be adjusted two-dimensionally, reflecting the displacement correction amount A that estimates in advance the displacement amount S resulting from the curvature. Accordingly, when the liquid crystal panel 10 is curved, the displacement amount S resulting from the curvature and the displacement correction amount A provided in advance may cancel each other, reducing the deviation in the relative positional relation between the black matrix BM, and the data lines DL1 and DL2 and the color filters CFg and CFb.

In the display device 1, the light from the light source (not illustrated) may be selectively transmitted by the liquid crystal panel 10, allowing for image display. Here, the liquid crystal panel 10 may be curved one-dimensionally (in the X direction), convexly rearward (to the back surface side) in an arc shape. Accordingly, as illustrated in Fig. 19, when an observer sees the liquid crystal panel 10 from the front, the center portion may be visually recognized to be gradually narrowed than the right and the left portions. This makes it possible to give the sense of unity and the feeling of immersion by the visual effect of perspective. In particular, it is possible to expect more realistic viewing of movie contents, etc. as if in a movie theater.

Moreover, since the speakers (not illustrated) may be disposed on the right and the left sides of the liquid crystal panel 10, picture and sound may be unified without visually separated, making it possible to enhance the sense of unity and the feeling of immersion, in association with the above-mentioned visual effects by the curvature of the liquid crystal panel 10.

Furthermore, in the present embodiment, the relative positional relation between the black matrix BM on the first substrate 31, and the data lines DL1 and DL2 and the color filters CFg and CFb on the second substrate 32 is adjusted two-dimensionally in accordance with the non-planarity characteristic of the liquid crystal panel 10. Accordingly, the deviation in the relative positional relation between the black matrix BM, and the data lines DL1 and DL2 and the color filters CFg and CFb may be reduced, and the unevenness 40 may be restrained.

As described above, in the present embodiment, the relative positional relation between the black matrix BM, and the data lines DL1 and DL2 and the color filters CFg and CFb is adjusted two-dimensionally in accordance with the non-planarity characteristic of the liquid crystal panel 10. Hence, it is possible to restrain color unevenness or display unevenness and to perform high quality display.

### (Modification Example 1)

Fig. 20 illustrates a cross-sectional configuration of a border between a liquid crystal display element in green and a liquid crystal display element in blue, in a display region of a liquid crystal cell according to a modification example 1 of the present disclosure. The present modification example involves providing an overcoat layer OC on a surface of the black matrix BM, to cover the inclined end surface of the black matrix BM to form a planar surface. This may prevent the orientation of the liquid crystal molecules M from being disturbed, restraining light leakage. Otherwise, the present modification example may have similar configuration, workings, and effects to those of the above-described example embodiment. Also, a display device 1A may be manufactured in a similar manner to that of the above-described example embodiment except that the black matrix BM is covered with the overcoat layer OC.

### (Modification Example 2)

It is to be noted that, in the above-described example embodiment, as illustrated in Fig. 6, description is given on a case of the so-called COA structure in which the color filter CF is provide on the first substrate 31 side. However, as illustrated in Fig. 21, the present disclosure may be applicable to an ordinary structure in which the data lines DL1 and DL2 are provided on the first substrate 31, while the color filters CFg and CFb, and the black matrix BM are provided on the second substrate 32.

Specifically, on the first substrate 31, for example, the interlayer insulating film 31A, the data lines DL1 and DL2, the interlayer insulating film 31C such as SiN, and the orientation film 31B may be provided in the order of closeness to the first substrate 31. On the second substrate 32, for example, the black matrix BM, the color filters CFg and CFb, the overcoat layer OC, and the orientation film 32B may be provided in the order of closeness to the second substrate 32.

In the present modification example, the data lines DL1 and DL2 correspond to a concrete example of a "first structure" in the present disclosure. The black matrix BM and the color filters CFg and CFb correspond to a concrete example of a "second structure" in the present disclosure.

In a display device 1B, the relative positional relation between the black matrix BM and the color filters CFg and CFb, and the data lines DL1 and DL2 is adjusted two-dimensionally in accordance with the non-planarity characteristic of the liquid crystal panel 10 (the liquid crystal cell 12). Thus, in the display device 1B, similarly to the above-described example embodiment, it is possible to restrain color unevenness or display unevenness and to perform high quality display.

Specifically, in the present modification example, when the liquid crystal panel 10 is curved, as illustrated in Fig. 22, the deviation in the relative positional relation between the black matrix BM and the color filters CFg and CFb, and the data lines DL1 and DL2 may be generated. In the ordinary structure as in the present modification example, similarly to the above-described example embodiment, the black matrix BM may be affected by the deviation, causing possibility of occurrence of intensity unevenness due to light leakage. The color filters CFg and CFb may be also affected by the deviation as well, causing possibility of occurrence of color unevenness.

It is possible to restrain the black matrix BM from being affected by the deviation, by the two-dimensional adjustment of the arrangement of the black matrix BM reflecting the displacement correction amount A, in a similar manner to the above-described example embodiment. It is also possible to restrain the color filters CFg and CFb from being affected by the deviation, by arranging the color filters CFg and CFb in accordance of the adjusted arrangement of the black matrix BM.

Furthermore, as illustrated in Fig. 21, the overcoat layer OC may be preferably provided on the surfaces of the black matrix BM and the color filters CFg and CFb. In this way, level differences due to the black matrix BM and the color filters CFg and CFb may be covered to form a planar surface. This makes it possible to restrain the orientation of the liquid crystal molecules from being disturbed, restraining light leakage.

The present modification example may involve possibility of slight decrease in intensity due to light absorption by the overcoat layer OC, and may be suitable for a 2K panel, etc. On the other hand, the COA structure as in the above-described example embodiment may involve less decrease in intensity, as compared to the present modification example, and may be suitable for a 4K panel including a large screen with high image quality.

### (Modification Example 3)

Also, the present disclosure may be applicable to a case of a BOA structure, as illustrated in Fig. 23, in which the black matrix BM is provided on the first substrate 31.

Specifically, on the first substrate 31, for example, the data lines DL1 and DL2, the black matrix BM, the overcoat layer OC, and the orientation film 31B may be provided in the order of closeness to the first substrate 31. On the second substrate 32, for example, the interlayer insulating film 32A, the color filters CFg and CFb, and the orientation film 32B may be provided in the order of closeness to the second substrate 32.

In the present modification example, the data lines DL1 and DL2, and the black matrix BM correspond to a concrete example of a "first structure" of the present disclosure. The color filters CFg and CFb correspond to a concrete example of a "second structure" of the present disclosure.

In a display device 1C, the relative positional relation between the data lines DL1 and DL2 and the black matrix BM, and the color filters CFg and CFb is adjusted two-dimensionally in accordance with the non-planarity characteristic of the liquid crystal panel 10 (the liquid crystal cell 12). Thus, in the display device 1C, similarly to the above-described example embodiment, it is possible to restrain color unevenness or display unevenness and to perform high quality display.

Specifically, in the present modification example, when the liquid crystal panel 10 is curved, as illustrated in Fig. 24, the deviation in the relative positional relation between the data lines DL1 and DL2 and the black matrix BM, and the color filters CFg and CFb may be generated. In the BOA structure as in the present modification example, the color filters CFg and CFb may be affected by the deviation, causing possibility of occurrence of color unevenness. Moreover, the orientation of liquid crystal molecules may be disturbed by positional displacement of the Tsuno region TN, which may be a possible cause of light leakage.

It is possible to restrain the color filters CFg and CFb from being affected by the deviation, by the two-dimensional adjustment of the arrangement of the color filtlers CFg and CFb reflecting the displacement correction amount A, in a similar manner to the above-described example embodiment.

Furthermore, as illustrated in Fig. 23, the overcoat layer OC may be preferably provided on the surfaces of the data lines DL1 and DL2 and the black matrix BM. In this way, level differences due to the data lines DL1 and DL2 and the black matrix BM may be covered to form a planar surface. This makes it possible to restrain the orientation of the liquid crystal molecules from being disturbed, restraining light leakage.

### (Summary)

Table 1 summarizes the forgoing description on a chart, that is, structures before application of the present disclosure, structures after the application of the present disclosure, and disadvantages before the application of the present disclosure, as to the COA structure in the example embodiment and the modification example 1, the ordinary structure in the modification example 2, and the BOA structure in the modification example 3.

**[Table 1]**

| CLASSIFICATION/OUTLINES OF STRUCTURES | STRUCTURES IN CURVED PANELS | | MAIN DISADVANTAGES OF CURVED PANELS BEFORE APPLICATION OF THE PRESENT DISCLOSURE |
|---|---|---|---|
| | BEFORE APPLICATION OF THE PRESENT DISCLOSURE | AFTER APPLICATION OF THE PRESENT DISCLOSURE | |
| ORDINARY STRUCTURE/BM AND CF ON A SEPARATE SUBSTRATE FROM TFT | 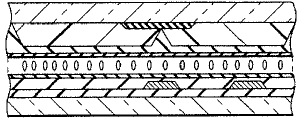 | 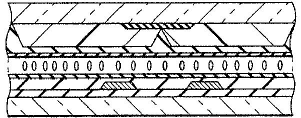 | COLOR UNEVENNESS OR LIGHT LEAKAGE |
| COA/CF ON THE TFT SUBSTRATE SIDE | 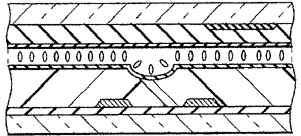 | 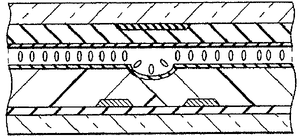 | LIGHT LEAKAGE |
| BOA/BM ON THE TFT SUBSTRATE SIDE | 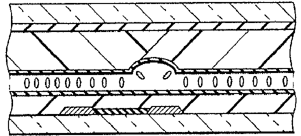 | 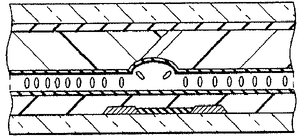 | COLOR UNEVENNESS OR LIGHT LEAKAGE |

### (Modification Examples 4 to 10)

Description is given next on modification examples 4 to 10 concerning the direction of the curvature or the shape of the liquid crystal panel 10.

### (Modification Example 4)

### (Example of Convex Rectangular Panel Curved in X Direction)

In the above-described example embodiment, description is given on a case in which the liquid crystal panel 10 is a concave panel curved convexly rearward (to the back surface side). However, the present disclosure may be applicable to a case in which the liquid crystal panel 10 is a convex panel curved convexly forward, as illustrated in Figs. 25 and 26.

### (Modification Example 5)

Moreover, in the above-described example embodiment, description is given on a case in which the liquid crystal panel 10 is curved one-dimensionally in the X direction. However, the present disclosure may be applicable to a case in which the liquid crystal panel 10 is curved one-dimensionally in the Y direction, as illustrated in Figs. 27 and 28. Possible applications of such a concave panel curved one-dimensionally in the Y direction may include, for example, commercial applications such as electronic advertisement.

In a case in which the liquid crystal panel 10 is curved one-dimensionally in the Y direction in this way, when the liquid crystal panel 10 is allowed to perform full black display, the colored unevenness 40 may be generated in an elliptic shape in vertical symmetry on both ends in the direction of the curvature (in the Y direction). Accordingly, the adjustment region 50 may be preferably provided on both ends in the direction of the curvature (in the Y direction) of the liquid crystal panel 10, in accordance with the positions of the unevenness 40 generated.

### (Modification Example 6)

In the above-described modification example 5, description is given on a case in which the liquid crystal panel 10 is a concave panel curved convexly rearward (to the back surface side). However, the present disclosure may be applicable to a case in which the liquid crystal panel 10 is a convex panel curved convexly forward, as illustrated in Figs. 29 and 30.

### (Modification Example 7)

Furthermore, in the above-described example embodiment, description is given on a case in which the liquid crystal panel 10 is rectangular in planar shape. However, the present disclosure may be applicable to a case in which, as illustrated in Figs. 31 to 33, the liquid crystal panel 10 is elliptic in planar shape and a concave spherical panel curved convexly rearward (to the back surface side). Possible applications of such a concave spherical panel may include, for example, applications in a theme park, an amusement park, etc.

When the liquid crystal panel 10 forms a spherical surface in this way, the whole spherical surface may preferably constitute the adjustment region 50. In the adjustment region 50, as illustrated in Fig. 31, the plural regions 50A, 50B, and 50C that form a multiple annular pattern may be preferably provided. Preferably, the displacement correction amount A may be largest in the innermost region 50C of the plural regions 50A to 50C, and may decrease stepwise from the innermost region 50C toward the outermost region 50A.

### (Modification Example 8)

In the above-described modification example 7, description is given on a case in which the liquid crystal panel 10 is a concave spherical panel curved convexly rearward (to the back surface side). However, the present disclosure may be applicable to a case in which the liquid crystal panel 10 is a convex spherical panel curved convexly forward, as illustrated in Figs. 34 to 36.

### (Modification Example 9)

In addition, in the above-described modification example 7, description is given on a case in which the whole liquid crystal panel 10 forms the spherical surface. However, the present disclosure may be applicable to a case in which part (only a periphery) of the liquid crystal panel 10 forms a spherical surface, as illustrated in Figs. 37 to 39.

Specifically, the liquid crystal panel 10 according to the present modification example may be a concave, partly-spherical panel including, for example, a planar portion 10A in a center and a spherical portion 10B around the planar portion 10A. In this case, the spherical portion 10B may preferably constitute the adjustment region 50. In the adjustment region 50, plural regions 50D to 50H that form a multiple annular pattern may be preferably provided. The displacement correction amount A may be largest in an intermediate region 50F of the plural regions 50D to 50H, may decrease stepwise from the intermediate region 50F toward an innermost region 50H, and may decrease stepwise from the intermediate region 50F toward an outermost region 50D.

The displacement correction amount A of the intermediate region 50F may be equivalent to, for example, that of the region 50C in the above-described example embodiment. The displacement correction amount A of the innermost region 50H and the outermost region 50D may be equivalent to that of the region 50A in the above-described example embodiment. The displacement correction amount A of the regions 50E and 50G may be equivalent to that of the region 50B in the above-described example embodiment.

### (Modification Example 10)

In the above-described modification example 9, description is given on a case in which the spherical portion 10B is curved convexly rearward (to the back surface). However, the present disclosure may be applicable to a case of a convex, partly-spherical panel in which the spherical portion 10B is curved convexly forward, as illustrated in Figs. 40 to 42.

### (Modification Examples 11 to 13)

In the following, description is given on modification examples 11 to 13 that make it possible to eliminate the overcoat layer OC.

### (Modification Example 11)

In the modification example 1, as illustrated in Fig. 20, the overcoat layer OC may be provided on the surface of the black matrix BM, to cover the inclined end surface of the black matrix BM to form a planar surface. This may prevent the orientation of the liquid crystal molecules from being disturbed, restraining light leakage. However, as illustrated in Fig. 43, it is also possible to reduce the influence of orientation defects of the liquid crystal molecules M, by omitting the overcoat layer OC and by decreasing an inclination angle θ of the black matrix BM. Omission of the overcoat layer OC makes it possible to eliminate light absorption in the overcoat layer OC, allowing for enhancement in intensity.

The black matrix BM according to the present modification example may be formed, for example, by decreasing the inclination angle θ of a side surface of the black matrix BM by adjustment of etching conditions to form a wedge-shaped cross-section as illustrated in Fig. 43. The inclination angle θ of the side surface of the black matrix BM may be preferably in a range of, for example, 5 degrees to 45 degrees both inclusive. Thereby, it is possible to reduce the influence of orientation defects of the liquid crystal molecules M.

### (Modification Example 12)

Alternatively, as illustrated in Fig. 44, it is also possible to reduce the influence of orientation defects of the liquid crystal molecules M, by allowing the black matrix BM and the overcoat layer OC to be level with each other.

One possible method of allowing the black matrix BM and the overcoat layer OC to be level with each other may be, for example, as follows. The black matrix BM and the overcoat layer OC may be formed on the second substrate 32, and then, only the overcoat layer OC may be etched.

### (Modification Example 13)

In another alternative, as illustrated in Figs. 45 and 46, a recess 32C may be provided in the second substrate 32, and then, the black matrix BM may be embedded in the recess 32C. In this way, it is also possible to omit the overcoat layer OC and to reduce the influence of orientation defects of the liquid crystal molecules M.

The recess 32C may have preferably a concave shape with a planar bottom. Since the black matrix BM is configured of a resin, the planar bottom of the recess 32C may make it easier to allow the black matrix BM to be planar as a whole.

In the present modification example, first, the recess 32C may be formed by machining, etc. of the second substrate 32. The black matrix BM may be embedded in the recess 32C. Next, the surface of the black matrix BM may be planarized by etching, allowing the surface of the black matrix BM to be flush with a surface of the second substrate 32.

Although description has been made by giving the example embodiment as mentioned above, the contents of the present disclosure are not limited to the above-mentioned example embodiment and may be modified in a variety of ways. For example, in the above-described example embodiment and modification examples, description is given on a case in which the adjustment region 50 is divided into the plural regions 50A to 50C in a triple annular pattern with three stages, or into the plural regions 50D to 50H in a quintet annular pattern with three stages. However, the adjustment region 50 is not limited to these examples, but may be divided in a double annular pattern with two stages, or in a triple annular pattern with two stages. Alternatively, the adjustment region 50 may be divided in a multiple annular pattern with four or more stages.

Moreover, for example, a material and a thickness of each layer as described in the above-mentioned example embodiment are not limited to as exemplified above, but other materials and other thicknesses may be adopted. The liquid crystal layer 33 is not limited to the VA mode.

Furthermore, for example, in the above-described example embodiment, description has been given on specific configurations of the display device 1 (television device). However, it is not necessary to include all the components, and another component or other components may be further provided.

The present disclosure may be applicable regardless of a screen size of the liquid crystal panel 10. Moreover, applicability of the present disclosure is not particularly limited by definition of the liquid crystal panel 10; the present disclosure may be applicable to any of an FHD (Full High Definition) panel, a 2K panel, and a 4K panel. As definition becomes higher, the influence of the level differences due to the black matrix BM becomes larger, and even higher effects can be enjoyed.

The present disclosure may be widely applied to an electronic apparatus in various fields that is configured to display an image or a picture based on a picture signal inputted from outside or generated inside; specifically, as well as a television device that has been explained in the above-described example embodiment, other display devices, a curved smart phone, a tablet, etc.

It is to be noted that the contents of the present disclosure may have the following configurations.
(1) A display device, including a display panel,
   the display panel including:
   a first substrate and a second substrate facing each other;
   a first structure provided on the first substrate; and
   a second structure provided on the second substrate,
   wherein relative positional relation between the first structure and the second structure is adjusted two-dimensionally in accordance with a non-planarity characteristic of the display panel.
(2) The display device according to (1),
   wherein the display panel is curved, and includes an adjustment region to which two-dimensional adjustment of the relative positional relation is applied.
(3) The display device according to (2),
   wherein the display panel includes a plurality of pixels arranged in a two-dimensional array,
   the first structure and the second structure are provided in each of the plurality of pixels, and
   in the adjustment region, a displacement correction amount is provided for each of the plurality of pixels, the displacement correction amount being an amount of correction of displacement of the second structure with respect to the first structure in a direction of curvature and varying two-dimensionally over the plurality of pixels.
(4) The display device according to (3),
   wherein the displacement correction amount is largest in a center portion of the adjustment region, and decreases two-dimensionally from the center portion of the adjustment region toward a peripheral portion of the adjustment region.
(5) The display device according to (4),
   wherein plural regions that form a multiple annular pattern are provided in the adjustment region, and
   the displacement correction amount is largest in an innermost region of the plural regions, and decreases stepwise from the innermost region toward an outermost region.
(6) The display device according to (5),
   wherein the display panel is curved one-dimensionally, and includes the adjustment region on both ends in the direction of the curvature.
(7) The display device according to (5),
   wherein the display panel forms a spherical surface, and the spherical surface constitutes the adjustment region.
(8) The display device according to (4),
   wherein the display panel includes a planar portion and a spherical portion around the planar portion, and the spherical portion constitutes the adjustment region,
   plural regions that form a multiple annular pattern is provided in the adjustment region, and
   the displacement correction amount is largest in an intermediate region of the plural regions, decreases stepwise from the intermediate region toward an innermost region, and decreases stepwise from the intermediate region toward an outermost region.
(9) The display device according to any one of (1) to (8),
   wherein the non-planarity characteristic is a measurement value concerning color unevenness or display unevenness based on predetermined picture information.
(10) The display device according to any one of (1) to (9),
   wherein the display panel is a liquid crystal panel,
   the first structure is a black matrix, and
   the second structure is a wiring or a color filter.
(11) The display device according to (10),
   wherein the liquid crystal panel is of a VA mode.
(12) The display device according to (10) or (11), including an overcoat layer provided on a surface of the black matrix or on a surface of the color filter.
(13) A method of manufacturing a display device, including:
   forming a first structure on a first substrate;
   forming a second structure on a second substrate; and
   allowing the first substrate and the second substrate to face each other to form a display panel,
   wherein relative positional relation between the first structure and the second structure is adjusted two-dimensionally in accordance with a non-planarity characteristic of the display panel.
(14) The method of manufacturing the display device according to (13),
   wherein, forming the first structure or forming the second structure, an adjustment region to which two-dimensional adjustment of the relative positional relation is applied is formed in a state in which the first substrate or the second substrate is planar, and
   forming the display panel, the display panel is curved.
(15) The method of manufacturing the display device according to (14),
   wherein a plurality of pixels in a two-dimensional array are formed in the display panel,
   the first structure and the second structure are provided in each of the plurality of pixels, and
   in the adjustment region, a displacement correction amount is provided for each of the plurality of pixels, the displacement correction amount being an amount of correction of displacement of the second structure with respect to the first structure in a direction of curvature and varying two-dimensionally over the plurality of pixels.
(16) The method of manufacturing the display device according to (15),
   wherein the displacement correction amount is largest in a center portion of the adjustment region, and decreases two-dimensionally from the center portion of the adjustment region toward a peripheral portion of the adjustment region.
(17) The method of manufacturing the display device according to (16),
   wherein plural regions that form a multiple annular pattern are provided in the adjustment region, and
   the displacement correction amount is largest in an innermost region of the plural regions, and decreases stepwise from the innermost region toward an outermost region.
(18) The method of manufacturing the display device according to (16) or (17),
   wherein a measurement value concerning color unevenness or display unevenness based on predetermined picture information is obtained as the non-planarity characteristic, and
   the displacement correction amount is measured or calculated based on the measurement value.
(19) The method of manufacturing the display device according to any one of (13) to (18),
   wherein a liquid crystal panel is formed as the display panel,
   a black matrix is formed as the first structure, and
   a wiring or a color filter is formed as the second structure.
(20) The method of manufacturing the display device according to (19),
   wherein an overcoat layer is formed on a surface of the black matrix or on a surface of the color filter.

This application claims the benefit of Japanese Priority Patent Application JP 2013-53261 filed on March 15, 2013 the entire contents of which are incorporated herein by reference.

It should be understood by those skilled in the art that various modifications, combinations, sub-combinations and alterations may occur depending on design requirements and other factors insofar as they are within the scope of the appended claims or the equivalents thereof.

## Claims

1. A display device, comprising a display panel,
the display panel including:
a first substrate and a second substrate facing each other;
a first structure provided on the first substrate; and
a second structure provided on the second substrate,
wherein relative positional relation between the first structure and the second structure is adjusted two-dimensionally in accordance with a non-planarity characteristic of the display panel.

2. The display device according to claim 1,
wherein the display panel is curved, and includes an adjustment region to which two-dimensional adjustment of the relative positional relation is applied.

3. The display device according to claim 2,
wherein the display panel includes a plurality of pixels arranged in a two-dimensional array,
the first structure and the second structure are provided in each of the plurality of pixels, and
in the adjustment region, a displacement correction amount is provided for each of the plurality of pixels, the displacement correction amount being an amount of correction of displacement of the second structure with respect to the first structure in a direction of curvature and varying two-dimensionally over the plurality of pixels.

4. The display device according to claim 3,
wherein the displacement correction amount is largest in a center portion of the adjustment region, and decreases two-dimensionally from the center portion of the adjustment region toward a peripheral portion of the adjustment region.

5. The display device according to claim 4,
wherein plural regions that form a multiple annular pattern are provided in the adjustment region, and
the displacement correction amount is largest in an innermost region of the plural regions, and decreases stepwise from the innermost region toward an outermost region.

6. The display device according to claim 5,
wherein the display panel is curved one-dimensionally, and includes the adjustment region on both ends in the direction of the curvature.

7. The display device according to claim 5,
wherein the display panel forms a spherical surface, and the spherical surface constitutes the adjustment region.

8. The display device according to claim 4,
wherein the display panel includes a planar portion and a spherical portion around the planar portion, and the spherical portion constitutes the adjustment region,
plural regions that form a multiple annular pattern is provided in the adjustment region, and
the displacement correction amount is largest in an intermediate region of the plural regions, decreases stepwise from the intermediate region toward an innermost region, and decreases stepwise from the intermediate region toward an outermost region.

9. The display device according to claim 1,
wherein the non-planarity characteristic is a measurement value concerning color unevenness or display unevenness based on predetermined picture information.

10. The display device according to claim 1,
wherein the display panel is a liquid crystal panel,
the first structure is a black matrix, and
the second structure is a wiring or a color filter.

11. The display device according to claim 10,
wherein the liquid crystal panel is of a VA mode.

12. The display device according to claim 10, comprising an overcoat layer provided on a surface of the black matrix or on a surface of the color filter.

13. A method of manufacturing a display device, comprising:
forming a first structure on a first substrate;
forming a second structure on a second substrate; and
allowing the first substrate and the second substrate to face each other to form a display panel,
wherein relative positional relation between the first structure and the second structure is adjusted two-dimensionally in accordance with a non-planarity characteristic of the display panel.

14. The method of manufacturing the display device according to claim 13,
wherein, forming the first structure or forming the second structure, an adjustment region to which two-dimensional adjustment of the relative positional relation is applied is formed in a state in which the first substrate or the second substrate is planar, and
forming the display panel, the display panel is curved.

15. The method of manufacturing the display device according to claim 14,
wherein a plurality of pixels in a two-dimensional array are formed in the display panel,
the first structure and the second structure are provided in each of the plurality of pixels, and
in the adjustment region, a displacement correction amount is provided for each of the plurality of pixels, the displacement correction amount being an amount of correction of displacement of the second structure with respect to the first structure in a direction of curvature and varying two-dimensionally over the plurality of pixels.

16. The method of manufacturing the display device according to claim 15,
wherein the displacement correction amount is largest in a center portion of the adjustment region, and decreases two-dimensionally from the center portion of the adjustment region toward a peripheral portion of the adjustment region.

17. The method of manufacturing the display device according to claim 16,
wherein plural regions that form a multiple annular pattern are provided in the adjustment region, and
the displacement correction amount is largest in an innermost region of the plural regions, and decreases stepwise from the innermost region toward an outermost region.

18. The method of manufacturing the display device according to claim 16,
wherein a measurement value concerning color unevenness or display unevenness based on predetermined picture information is obtained as the non-planarity characteristic, and
the displacement correction amount is measured or calculated based on the measurement value.

19. The method of manufacturing the display device according to claim 13,
wherein a liquid crystal panel is formed as the display panel,
a black matrix is formed as the first structure, and
a wiring or a color filter is formed as the second structure.

20. The method of manufacturing the display device according to claim 19,
wherein an overcoat layer is formed on a surface of the black matrix or on a surface of the color filter.
